# EUROPEAN PATENT APPLICATION

(11) **EP 4 686 308 A1**
(43) Date of publication of application: **28.01.2026**
(21) Application number: 24774670.4
(22) Date of filing: 06.03.2024
(51) Int. Cl.: H04W 76/10, H04W 12/088, H04W 88/16, H04W 88/18

(54) **TERMINAL DEVICE, INFORMATION PROCESSING DEVICE, AND COMMUNICATION METHOD**

(30) Priority: 22.03.2023 JP 2023045462
(71) Applicant: Sony Group Corporation, Tokyo 108-0075 (JP)
(72) Inventor: TAKANO, Hiroaki, Tokyo 108-0075 (JP)
(74) Representative: Witte, Weller & Partner Patentanwälte mbB
(86) International application number: PCT/JP2024/008424
(87) International publication number: WO 2024/195529

(57) **Abstract**

A terminal device of the present disclosure is provided with a communication unit and a control unit. The communication unit communicates with a base station arranged in a first private network. The control unit acquires connection request information with another terminal device connected to a second private network different from the first private network. The control unit requires that an information processing device arranged in the first private network to perform connection processing for connecting to another terminal device on the basis of connection request information. The information processing device performs the connection processing for connecting to the second private network on the basis of the request.

## Description

### Field

The present disclosure relates to a terminal device, an information processing device, and a communication method.

### Background

In recent years, a private network using cellular radio communication has attracted attention. The communication device in the private network can communicate not only with other communication devices in the private network but also with communication devices outside the private network (for example, a communication device in another private network).

### Citation List

### Patent Literature

Patent Literature 1: JP 2022-8873 A

### Summary

### Technical Problem

However, in a case where communication is performed between different private networks, a communication device communicates with a communication device on a partner side via a public network. Therefore, it is difficult to perform communication between different private networks while maintaining security strength.

Therefore, the present disclosure provides a mechanism capable of implementing high-security inter-private network communication.

Note that, the above problem or object is merely one of a plurality of problems or objects that can be solved or achieved by a plurality of embodiments disclosed in the present specification.

### Solution to Problem

A terminal device of the present disclosure is provided with a communication unit and a control unit. The communication unit communicates with a base station arranged in a first private network. The control unit acquires connection request information with another terminal device connected to a second private network different from the first private network. The control unit requires that an information processing device arranged in the first private network to perform connection processing for connecting to another terminal device on the basis of connection request information. The information processing device performs the connection processing for connecting to the second private network on the basis of the request. Brief Description of Drawings
FIG. 1 is a diagram illustrating an example of a private network.
FIG. 2 is a diagram illustrating a communication system in a case where there is one 4G/5G private network of a partner.
FIG. 3 is a diagram illustrating a communication system in a case where there is a plurality of 4G/5G private networks of the partner.
FIG. 4 is a diagram illustrating an outline configuration example of a communication system according to the embodiment of the present disclosure.
FIG. 5 is a diagram illustrating a configuration example of a communication system according to the embodiment of the present disclosure.
FIG. 6 is a diagram illustrating a configuration example of an application server according to the embodiment of the present disclosure.
FIG. 7 is a diagram illustrating a configuration example of a management device according to the embodiment of the present disclosure.
FIG. 8 is a diagram illustrating a configuration example of a base station according to the embodiment of the present disclosure.
FIG. 9 is a diagram illustrating a configuration example of a terminal device according to the embodiment of the present disclosure.
FIG. 10 is a diagram illustrating an example of a 5G architecture.
FIG. 11 is a diagram illustrating an example of a 4G architecture.
FIG. 12 is a diagram illustrating an example of a flow of connection demand processing according to a first embodiment of the present disclosure.
FIG. 13 is a diagram illustrating an example of a flow of connection demand processing according to the first embodiment of the present disclosure.
FIG. 14 is a diagram illustrating another example of a flow of connection demand processing according to the first embodiment of the present disclosure.
FIG. 15 is a diagram for describing an example of a contract according to a second embodiment of the present disclosure.
FIG. 16 is a diagram illustrating an example of a gateway device according to a third embodiment of the present disclosure.
FIG. 17 is a diagram illustrating an example of notification processing according to the third embodiment of the present disclosure.
FIG. 18 is a flowchart illustrating an example of a flow of connection processing executed by a management device according to the third embodiment of the present disclosure.
FIG. 19 is a flowchart illustrating an example of a flow of routing setting processing according to the third embodiment of the present disclosure.

### Description of Embodiments

Hereinafter, embodiments of the present disclosure are described in detail with reference to the accompanying drawings. Note that, in the present specification and the drawings, components having substantially the same functional configuration are denoted by the same reference numeral, and redundant description is omitted.

In the present specification and the drawings, a plurality of components having substantially the same functional configuration is distinguished by attaching different alphabets or numerals after the same reference sign in some cases. For example, a plurality of components having substantially the same functional configuration is distinguished as private networks PN_A and PN_B, and base stations 30A1, 30A2, 30B1, and 30B2 as necessary. Note that, in a case where it is not necessary to particularly distinguish each of a plurality of components having substantially the same functional configuration, only the same reference sign is attached. For example, in a case where it is not necessary to particularly distinguish the private networks PN_A and PN_B from each other, they are simply referred to as private networks PN. For example, in a case where it is not necessary to particularly distinguish the base stations 30A1 and 30A2 from each other, they are simply referred to as base stations 30A. For example, in a case where it is not necessary to particularly distinguish the base stations 30A and 30B from each other, they are simply referred to as base stations 30.

One or a plurality of embodiments (including examples, variations, and applications) described below can each be implemented independently. In contrast, at least a part of a plurality of embodiments described below may be implemented appropriately in combination with at least a part of other embodiments. The plurality of embodiments may include novel features different from each other. Therefore, the plurality of embodiments can contribute to solving different objects or problems, and can exhibit different effects.

### <<1. Outline>>

### <1-1. Local 5G/Private 5G>

Local 5G and private 5G are cellular communication services performed in a limited area such as a factory, an office, a studio, a hospital, or a university. By limiting service provision to a local area, there is an advantage that a customized cellular service can be provided.

Note that, in the present embodiment, private 5G and local 5G are sometimes referred to as a 4G/5G private network or a 4G/5G virtual private network.

Note that, the private network is not limited to the 4G/5G private network. In the following description, the private network is sometimes referred to as a non-public cellular closed network or simply a closed network.

Security is of importance in many use cases using the private network. For example, in a case of a factory, this is a case where a technology with high confidentiality is handled as in a production line of the factory. A hospital or the like in which personal information regarding privacy of a patient is often handled also is a use case with high confidentiality. Also in a university and an office, personal information is often handled, and communication regarding the personal information is required to have high confidentiality.

### <1-2. Feature of Private Network>

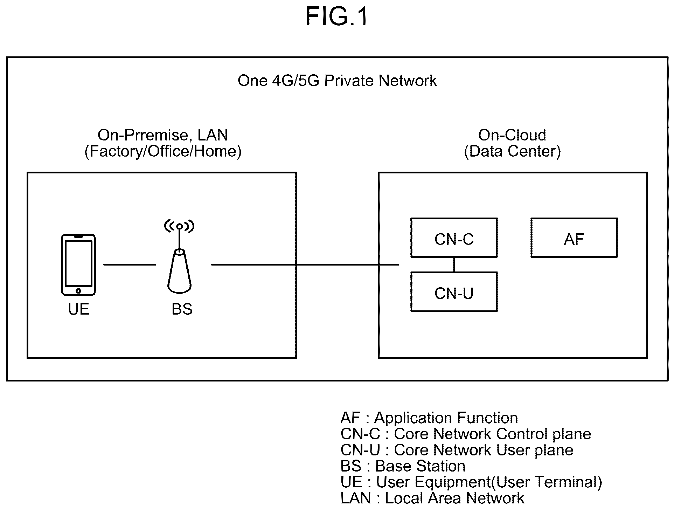

Before describing an outline of the present embodiment, a feature of the private network will be described. FIG. 1 is a diagram illustrating an example of the private network. A predetermined 4G/5G private network illustrated in FIG. 1 includes a UE, a base station (BS), a core network control plane (CN-C), a core network user plane (CN-U), and an application function (AF).

The UE and the BS are arranged in a facility such as a factory, an office, or a home (on-premise), or a local area network (LAN). The CN-C, the CN-U, and the AF are arranged in a cloud such as a data center.

### (1) Property of Closed Network

In the private network, the LAN and the cloud are connected to each other in the closed network. The closed network is, for example, a virtual private network (VPN).

In the closed network, the base station arranged in the LAN (or in the facility) and the core network arranged in the cloud are connected to each other using a private IP address without using a public IP address.

Communication limited in the closed network is resistant to external wiretapping and the like. The communication limited in the closed network can be set to block any access from the outside of the closed network. In the communication limited in the closed network, setting can be performed such that a packet is transmitted from the closed network to the outside and only a response thereto is put into the closed network. Usually, the device outside the closed network cannot trigger to access the device (the device including the UE) in the closed network. In this manner, it can be said that confidentiality of the closed network is high.

In the communication limited in the closed network, translation between the private IP address and a global IP address is not necessary. Therefore, user datagram protocol (UDP) communication can be easily used for the communication limited in the closed network.

A transmission control protocol (TCP) is usually used for communication that requires the translation between the private IP address and the global IP address. Therefore, the feature that the UDP communication is easy to use is attractive for applications using the UDP communication. When UDP is used, there is an advantage of a small latency.

### (2) IP Address Provided to Terminal Device

When a terminal device attaches to a network, an IP address is provided from the core network to the terminal device. Usually, the private IP address is provided.

In a public network, the public IP address is sometimes directly provided to the terminal device. In contrast, in the 4G/5G private network, which is a non public network, the private IP address is usually provided to the terminal device.

Therefore, network address translation for translating the private IP address into the public IP address is performed on the packet transmitted from the closed network to an external network.

The AF can acquire, from the core network, information indicating which IP address is provided to the terminal device. In 5G, an application program interface (API) referred to as a service based interface (SBI) for acquiring the IP address of the terminal device is prepared. In 4G also, the AF may acquire the IP address of the terminal device as in 5G by accessing a subscriber file that stores the IP address for each terminal device.

In the closed network, the AF can directly transmit an IP packet to the terminal device (that is, perform network initiated message push) in some cases by holding the IP address of the terminal device.

### <1-3. Cooperation of Plurality of Private Networks>

In the present embodiment, communication between different private networks is considered. For example, in a case where the communication is performed with the outside of the 4G/5G private network (closed network), the device in the closed network can perform communication with any partner outside the closed network once via the Internet.

In this case, since the packet once goes out to the public Internet, a security threat increases. It is not desirable for security to directly transmit the IP address of the terminal device to the partner.

The address of the packet is once translated from the private IP address to the public IP address when going out to the Internet. In this manner, the communication via the public network requires network address translation (NAT), which causes a problem such as an increase in latency and a complicated network topology.

In this manner, a disadvantage of network address translation (NAT) traversal occurs in the communication between the private networks via the public network. Therefore, UDP direct communication is difficult.

Note that, in a normal cellular, when the packet is transmitted from the outside of the cellular network to the terminal device with an IP address specified, there are cases where the packet directly arrives or not.

By allocating the global IP address directly to the terminal device, it is possible for the device outside the cellular network to directly transmit the packet to the global IP address. Note that, this method is limited to a case where a telecommunications carrier has abundant global IP addresses.

However, whether this method can be adopted depends on a security policy. If the device outside the cellular network can directly transmit the packet, there is a risk that undesired traffic flows in from outside the cellular network. Therefore, such packet is not accepted in most cases.

That is, when countermeasures for large security threat are taken, a degree of freedom might be reduced. It is not desirable for security to directly transmit the IP address of the terminal device to the partner. In a case of the cellular, there also is a disadvantage that a cost of the cellular network is higher than that of the 4G/5G private network. Therefore, it will be important in the future to prepare a plurality of 4G/5G private networks and directly connect them via a VPN tunnel.

Therefore, hereinafter, a case where different private networks are connected by the VPN tunnel will be considered.

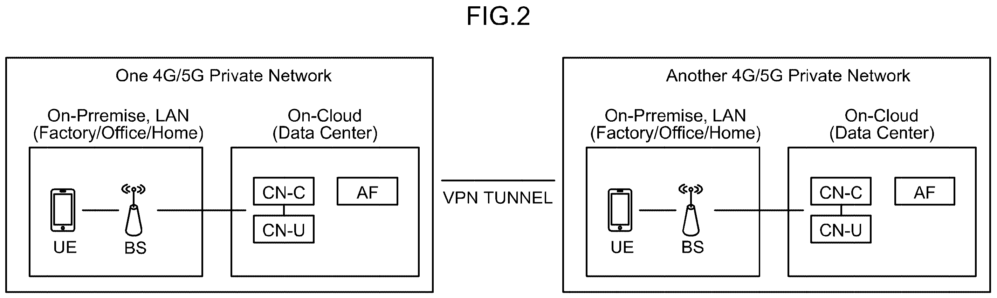

FIG. 2 is a diagram illustrating a communication system in a case where there is one 4G/5G private network of the partner. In an example in FIG. 2, two 4G/5G private networks are directly connected by VPN tunneling. Because the closed networks are connected to each other, the terminal device can transmit therein the packet to the terminal device or a client application on the partner side by using the private IP address.

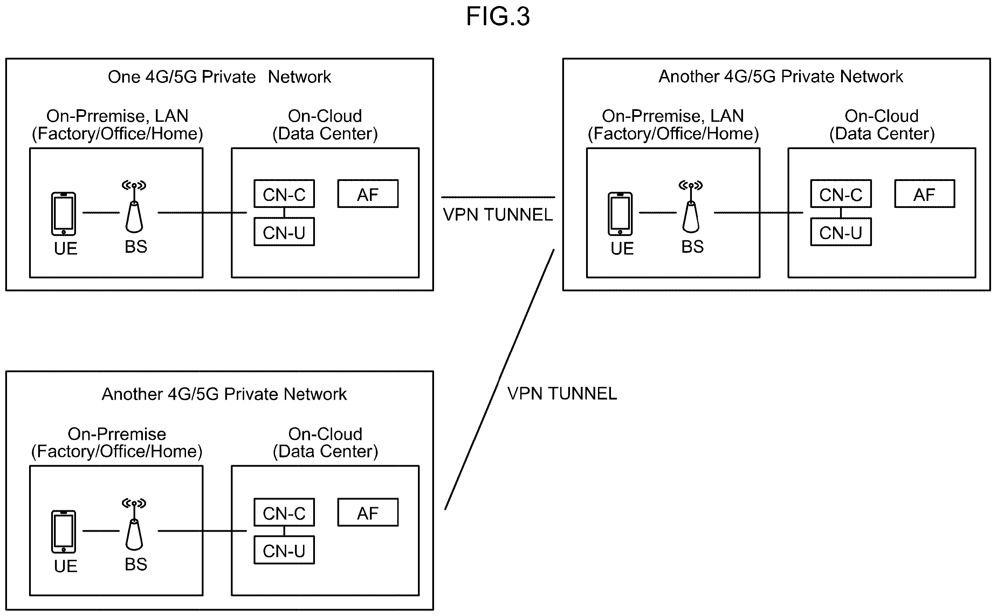

FIG. 3 is a diagram illustrating a communication system in a case where there is a plurality of 4G/5G private networks of the partner. FIG. 3 illustrates a case where there are two 4G/5G private networks of the partner, but the number of 4G/5G private networks of the partner may be three or more.

In a case where there is a plurality of partners, as illustrated in FIG. 3, the VPN tunnel is set with each of the plurality of partners. Star connection of a plurality of 4G/5G private networks is not desirable because there is a large influence in a case where a failure occurs in a central switch. In a case of one-to-one pairing, information is diffused only to the partner side, so that this topology is desirable also from security reasons.

Note that, a method of connecting a plurality of 4G/5G private networks by secure communication is not limited to a method of using the virtual private network (VPN) tunnel. As a method of connecting a plurality of 4G/5G private networks by secure communication, for example, a method of connecting by a dedicated line is conceived.

Here, a use case of a network in which a plurality of 4G/5G private networks cooperates is considered. The following is conceived as the use case.

### (1) Internet of Things (IoT)

There is a request to arrange IoT devices under the 4G/5G private network, control the IoT devices by an information processing device, and extract information from the IoT devices.

In this case, there is a disadvantage that a scale as an IoT system is insufficient because the number of IoT sensors is limited only by controlling the IoT devices in one 4G/5G private network and acquiring information. Therefore, there is a request for collecting the information by allowing a plurality of private networks to cooperate with each other.

In this case, a location of the IoT device communication with which is desired is known in advance in many cases. Since TCP connection tends to impose a heavy load of power consumption on the IoT device, there is a request for communication by UDP.

### (2) Game

When playing a network game, a case where the partner belongs to a different 4G/5G private network is conceived. In this case, since the partner with which communication is desired is determined by a game server, it is often not known until immediately before with which partner the communication is performed. In this case, it is considered that it is often desired to communicate by UDP rather than TCP due to latency constraints.

### (3) Metaverse

In a metaverse, communication between users is performed in a virtual space. The user wears a head mounted display for virtual reality (VR), for example, and operates an avatar representing the user in the virtual space. Accordingly, the users communicate with each other.

Since a response is important in such communication, a low-latency network is required. Security is also important. Therefore, it is required to implement low latency while securing security by directly connecting the private networks to each other.

### (4) Remote Monitoring

There may be a case where a video from a remotely located camera is desired to be monitored. In a case of a video such as VR, a large capacity and low latency may be required. It is desirable from a viewpoint of security that communication can be performed between the 4G/5G private networks in a case where monitoring videos are very important information.

### (5) Others

A plurality of private networks might be of different companies (operators). It is desirable that one company performs network management of a plurality of private networks, but customers using the private networks are different. For example, it is assumed that there are a customer A who measures using an IoT sensor capable of measuring wind power in Japan, and a customer B who measures wind power in Europe using an IoT sensor. It is assumed that a terminal device of the customer A is connected to a private network PN_A, and a terminal device of the customer B is connected to a private network PN_B. At that time, it is assumed that a company C needs to collect information from the terminal devices of the customers A and B using a terminal device connected to a private network PN_C. In this case, it is considered that the company C desires to connect the private network PN_A to the private network PN_B.

### <1-4. Attack from Malicious User in Closed Network>

In a case where a plurality of private networks is not allowed to cooperate (that is, the private network is used alone), a security threat is often small. This is because a user who connects to the network is limited to a user who uses the private network.

In contrast, in a case where a plurality of private networks is allowed to cooperate, the security threat increases in many cases. This is because, for a user using a certain private network PN_A, a user in another private network PN_B is not always a safe user. In a case where the private networks are allowed to cooperate, a possibility cannot be excluded that a user in a certain private network performs an attack to user equipment (UE) /application function (AF) /network function (NF) in another private network, such as transmitting a large amount of IP packets, spoofing, or wiretapping.

In order to reduce security threats, it is required that only an IP packet from an accepted user be allowed to enter the private network. That is, even if the private network PN_A and the private network PN_B are connected to each other, it is necessary to prevent an IP packet of an unaccepted user in the private network PN_B from entering the private network PN_A.

### <1-5. MAC Filtering and IP Filtering>

One method of allowing only the IP packet of the accepted user to enter the network is MAC filtering.

The MAC filtering is a method in which a gateway at an entrance of a network accepts entry of only an IP packet carried in a packet having an accepted MAC address to the network.

However, since the MAC address can be rewritten to any value, the MAC filtering is not sufficient as a security measure.

Another method of allowing only the IP packet of the accepted user to enter the network is IP filtering. The IP filtering is a method in which the gateway at the entrance of the network accepts entry of only an IP packet having an IP address in a specified IP address range as a source IP address to the network.

This IP filtering can be said to be a method superior to the MAC filtering as the security measure. This is because, even if a packet is transmitted by falsifying the source IP address, an intermediate router clearly knows that the falsified source IP address is not appropriate, so that the falsification of the IP address cannot be practically performed.

In a case of using the IP filtering, an IP packet having an unaccepted IP address cannot enter the network. Usually, the IP filtering is performed with the source IP address, but it is also possible to perform the IP filtering with a destination IP address. Although inbound IP filtering for entry from the outside of the network is important, it is also possible to perform outbound IP filtering for exit from the inside of the network. Although the present embodiment describes focusing on the inbound IP filtering, the present embodiment is also applicable to the outbound IP filtering.

### <1-6. Web3.0>

Web1.0 is a technology for allowing a user to browse static content. In Web2.0, as represented by a social networking service (SNS), a content exchanged bidirectionally is mainstream.

The Web1.0 and Web2.0 are centralized topologies in an application layer in which a server mediates exchange between users. Such topology is also referred to as a server-client model.

In contrast, an application layer topology referred to as a peer to peer (P2P) model is known. It is said that P2P type applications become important in Web3.0.

For example, a representative example of the Web3.0 includes a crypto-asset. This crypto-asset is characterized that there is no centralized server, and users secure reliability of transaction.

In the Internet layer, centralized control is not conventionally performed, and each router operates in distributed control.

In this manner, distributed control is becoming mainstream in both an upper layer such as the application layer and a lower layer such as the Internet. For this reason, there is a possibility that distributed control becomes mainstream also in cellular. In this manner, like a communication system topology according to the present embodiment to be described later, cellular topology of connecting a plurality of 4G/5G private networks when necessary is considered to be important in the future (for example, in 6G or the like).

### <1-7. Wireless LAN>

Note that, for example, a wireless LAN is known as radio communication other than the cellular communication. In the wireless LAN, the packet goes out from the closed network to the Internet via the NAT and is then transmitted to the closed network of the partner.

It is not impossible to directly connect the closed networks via the wireless LAN. However, unlike the cellular, the wireless LAN does not secure reliability of the user by a subscriber identity module (SIM) or the like. This is undesirable when securing security.

It is difficult for the wireless LAN to maintain low latency as compared with the cellular. In the wireless LAN, a latency might increase due to packet collision or the like in some cases. It is considered that there is almost no use case where an administrator of the wireless LAN connects to another wireless LAN.

### <1-8. Outline of Proposed Technology>

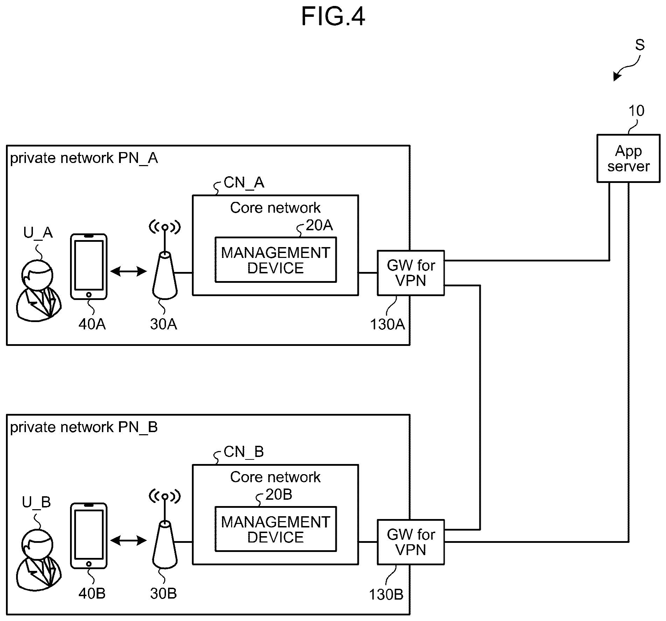

FIG. 4 is a diagram illustrating an outline configuration example of a communication system S according to the embodiment of the present disclosure. The communication system S of the present embodiment is provided with a plurality of private networks PN_A and PN_B and an application server 10. Note that, an administrator (first operator) who manages the private network PN_A (an example of a first private network) may be the same as or different from an administrator (second operator) who manages the private network PN_B (an example of a second private network).

The private network PN_A is provided with a core network CN_A, a base station 30A, a terminal device 40A, a gateway device 130A, and a management device 20A. The private network PN_A communicates with the private network PN_B and the application server 10 via a gateway device 130_A. The terminal device 40A operates on the basis of an instruction of the user U_A, for example.

The management device 20A is arranged in the core network CN_A or in the vicinity of the core network CN_A. For example, in a case where the management device 20A is arranged in the core network CN_A, a function of the management device 20A can be implemented as AF.

Note that, a configuration of the private network PN_B is the same as a configuration of the private network PN_A.

The application server 10 is, for example, an information processing device that provides services to the terminal devices 40A and 40B connected to the private networks PN_A and PN_B, respectively. The application server 10 transmits connection request information indicating which terminal devices 40 of which private networks PN are to be connected to each other to the terminal device 40.

Here, the application server 10 transmits, to the terminal device 40A, the connection request information instructing connection to the terminal device 40B of the private network PN_B. Here, the application server 10 transmits, to the terminal device 40B, the connection request information instructing connection to the terminal device 40A of the private network PN_A.

The terminal device 40A requires that the management device 20A perform connection processing for connecting to the terminal device 40B of the private network PN_B on the basis of the connection request information.

The management device 20A performs the connection processing for connecting to the private network PN_B on the basis of this request. Specifically, for example, the management device 20A requires that the gateway device 130A add a route (routing information) to the terminal device 40B of the private network PN_B.

The gateway device 130A updates a routing table on the basis of an instruction from the management device 20A.

In the private network PN_B also, similarly, a route to the terminal device 40A of the private network PN_A is set.

Accordingly, the terminal devices 40A and 40B of the different private networks PN_A and PN_B are directly connected to each other. The terminal devices 40A and 40B can communicate not via the public network. In this manner, the communication system S according to the present embodiment can implement communication between the private networks PN_A and PN_B with high security strength.

Note that, here, a case where there are two private networks PN has been described as an example, but the number of private networks PN may be three or more.

### <<2. Configuration of Communication System>>

Although the outline of the present embodiment has been described above, before the present embodiment is described in detail, the configuration of the communication system S provided with the information processing device of the present embodiment will be described. Note that, the communication system S can be rephrased as an information processing system.

### <2-1. Overall Configuration of Communication System>

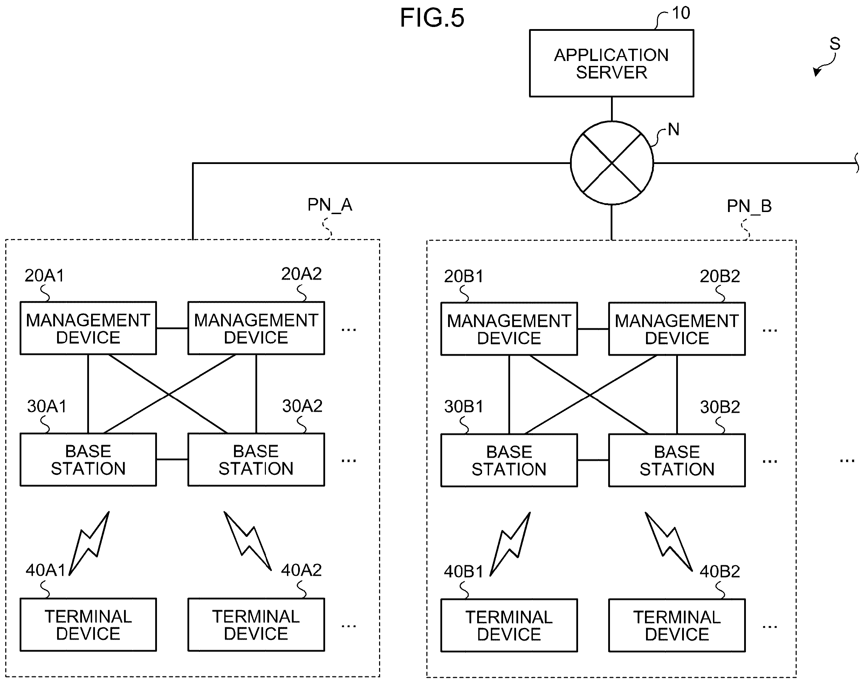

FIG. 5 is a diagram illustrating a configuration example of the communication system S according to the embodiment of the present disclosure. The communication system S is provided with a plurality of private networks PN. The private network PN is, for example, a private network using cellular radio communication such as 4G or 5G. The plurality of private networks PN is connected via a network N. Note that, although only one network N is illustrated in the example in FIG. 5, there may be a plurality of networks N.

Here, the network N is, for example, the public network such as the Internet. Note that, the network N is not limited to the Internet, and may be, for example, a local area network (LAN), a wide area network (WAN), a cellular network, a fixed telephone network, and a regional Internet protocol (IP) network. The network N may include a wired network or a radio network.

In each of the plurality of private networks PN, the management device 20, the base station 30, and the terminal device 40 are arranged. The plurality of private networks PN is connected to the application server 10 via the network N. The communication system S provides the user with a radio network capable of performing mobile communication by the respective radio communication devices forming the communication system S operating in cooperation. The radio network of the present embodiment includes, for example, a radio access network and a core network. Note that, in the present embodiment, the radio communication device is a device having a function of radio communication, and corresponds to the base station 30 and the terminal device 40 in the example in FIG. 5.

The communication system S may be provided with a plurality of management devices 20, a plurality of base stations 30, a plurality of terminal devices 40, and a plurality of application servers 10. In the example in FIG. 5, the communication system S is provided with the management devices 20A, 20B and the like as the management devices 20, and the base stations 30A, 30B and the like as the base stations 30. The communication system S is provided with the terminal devices 40A, 40B and the like as the terminal devices 40.

Note that, the devices in the drawings may be considered as devices in a logical sense. That is, a part of the devices in the drawings may be implemented by a virtual machine (VM), a container, a docker and the like, and they may be implemented on physically the same hardware.

Note that, the communication system S may support a radio access technology (RAT) such as long-term evolution (LTE) or new radio (NR). LTE and NR are types of the cellular communication technology, and enables mobile communication of the terminal device 40 by arranging a plurality of areas covered by the base station 30 in a cellular manner. Note that, a radio access scheme used by the communication system S is not limited to LTE and NR, and may be another radio access scheme such as wideband code division multiple access (W-CDMA) or code division multiple access 2000 (cdma2000).

The base station (or relay station) forming the communication system S may be a ground station or a non-ground station. The non-ground station may be a satellite station or an aircraft station. When the non-ground station is the satellite station, the communication system S may be a bent-pipe (transparent) type mobile satellite communication system.

Note that, in the present embodiment, the ground station (also referred to as a ground base station) refers to a base station (including relay station) installed on the ground. Herein, "ground" is the ground in a broad sense including not only land but also underground, water surface, and underwater. Note that, in the following description, the description of "ground station" may be replaced with "gateway".

Note that, an LTE base station is sometimes referred to as evolved node B (eNodeB) or eNB. An NR base station is sometimes referred to as gNodeB or gNB. In LTE and NR, a terminal device (also referred to as a mobile station or a terminal) is sometimes referred to as user equipment (UE). Note that, the terminal device is a type of a communication device, and is also referred to as a mobile station or a terminal.

In the present embodiment, a concept of the communication device includes not only a portable mobile device (terminal device) such as a mobile terminal but also a device installed in a structure or a mobile body. The structure or the mobile body itself may be regarded as the communication device. The concept of the communication device includes not only the terminal device but also the base station and the relay station. The communication device is a type of a processing device and an information processing device. The communication device can be rephrased as a transmission device or a reception device.

Hereinafter, a configuration of each device forming the communication system S is specifically described. Note that, the configuration of each device described below is merely an example. The configuration of each device may be different from the following configuration.

### <2-2. Configuration of Application Server>

Next, a configuration of the application server 10 will be described.

The application server 10 is an information processing device that provides an application service to the terminal device 40.

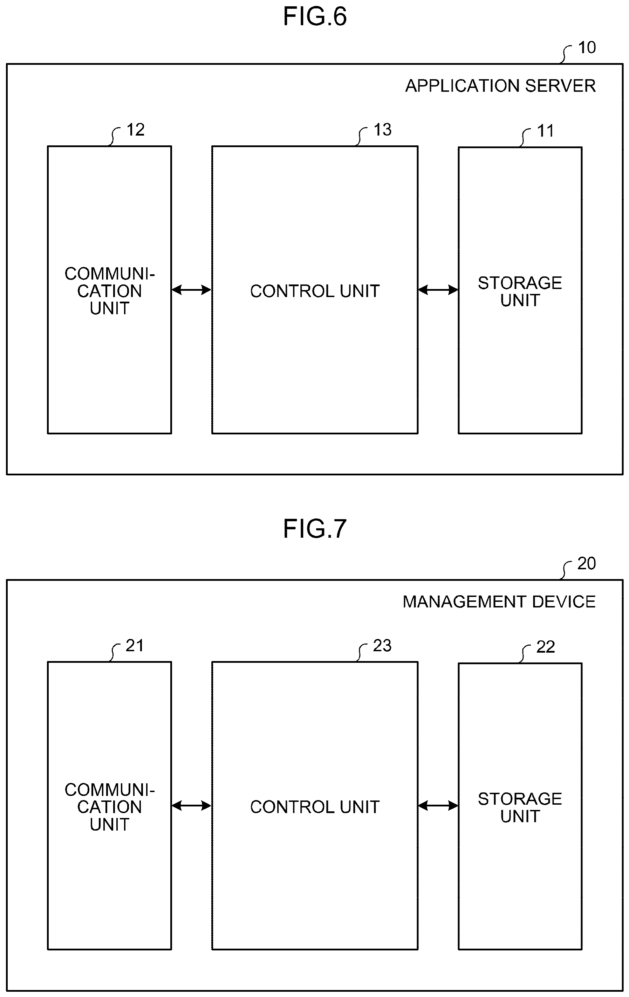

FIG. 6 is a diagram illustrating a configuration example of the application server 10 according to the embodiment of the present disclosure. The application server 10 is provided with a communication unit 11, a storage unit 12, and a control unit 13. Note that, the configuration illustrated in FIG. 6 is a functional configuration, and a hardware configuration may be different from this. The functions of the application server 10 may be statically or dynamically implemented in a distributed manner in a plurality of physically separated configurations. For example, the application server 10 may include a plurality of server devices.

The communication unit 11 is a communication interface for communicating with other devices. The communication unit 11 may be a network interface or a device connection interface. For example, the communication unit 11 may be a local area network (LAN) interface such as a network interface card (NIC), or may be a USB interface including a universal serial bus (USB) host controller, a USB port and the like. The communication unit 11 may be a wired interface or a radio interface. The communication unit 11 functions as a communication means of the application server 10. The communication unit 11 communicates with the terminal device 40 and the like under control of the control unit 13.

The storage unit 12 is a data readable/writable storage device such as a dynamic random-access memory (DRAM), a static random-access memory (SRAM), a flash memory, or a hard disk. The storage unit 12 functions as a storage means of the application server 10.

The control unit 13 is a controller that controls each unit of the application server 10. The control unit 13 is implemented by, for example, a processor such as a central processing unit (CPU), a micro processing unit (MPU), and a graphics processing unit (GPU). For example, the control unit 13 is implemented by a processor executing various programs stored in a storage device in the application server 10 using a random access memory (RAM) or the like as a work area. Note that, the control unit 13 may be implemented by an integrated circuit such as an application-specific integrated circuit (ASIC) and a field-programmable gate array (FPGA). Any of the CPU, MPU, GPU, ASIC, and FPGA can be regarded as a controller. The control unit 13 may be implemented by a graphics processing unit (GPU) in addition to or instead of the CPU.

### <2-3. Configuration of Management Device>

Next, a configuration of the management device 20 is described.

The management device 20 is an information processing device (computer) that manages the radio network. For example, the management device 20 is an information processing device that manages communication of the base station 30. The management device 20 may be, for example, a device having a function as a mobility management entity (MME). The management device 20 may be a device having a function as an access and mobility management function (AMF) and/or a session management function (SMF). It goes without saying that the functions of the management device 20 are not limited to the MME, AMF, and SMF. The management device 20 may be a device having a function as a network slice selection function (NSSF), an authentication server function (AUSF), a policy control function (PCF), or a unified data management (UDM). The management device 20 may be a device having a function as a home subscriber server (HSS).

Note that, the management device 20 may have a function of a gateway. For example, the management device 20 may have a function as a serving gateway (S-GW) or a packet data network gateway (P-GW). The management device 20 may have a function of a user plane function (UPF). At that time, the management device 20 may have a plurality of UPFs. The management device 20 may have a function of private network association management (PNAM).

The core network has a plurality of network functions, and respective network functions may be aggregated into one physical device or distributed to a plurality of physical devices. That is, the management device 20 may be arranged in a plurality of devices in a distributed manner. Moreover, this distributed arrangement may be controlled to be executed dynamically. The base station 30 and the management device 20 form one network, and provide a radio communication service to the terminal device 40. The management device 20 is connected to the Internet, and the terminal device 40 can use various services provided via the Internet via the base station 30.

Note that, the management device 20 is not necessarily a device forming the core network. For example, it is assumed that the core network is a core network of wideband code division multiple access (W-CDMA) or code division multiple access 2000 (cdma2000). At that time, the management device 20 may be a device that functions as a radio network controller (RNC).

FIG. 7 is a diagram illustrating a configuration example of the management device 20 according to the embodiment of the present disclosure. The management device 20 is provided with a communication unit 21, a storage unit 22, and a control unit 23. Note that, the configuration illustrated in FIG. 7 is a functional configuration, and a hardware configuration may be different from this. The functions of the management device 20 may be statically or dynamically implemented in a distributed manner in a plurality of physically separated configurations. For example, the management device 20 may include a plurality of server devices.

The communication unit 21 is a communication interface for communicating with other devices. The communication unit 21 may be a network interface or a device connection interface. For example, the communication unit 21 may be a local area network (LAN) interface such as a network interface card (NIC), or may be a USB interface including a universal serial bus (USB) host controller, a USB port and the like. The communication unit 21 may be a wired interface or a radio interface. The communication unit 21 functions as a communication means of the management device 20. The communication unit 21 communicates with the base station 30 and the like under control of the control unit 23.

The storage unit 22 is a storage device capable of reading and writing data, such as a DRAM, an SRAM, a flash memory, or a hard disk. The storage unit 22 functions as a storage means of the management device 20. The storage unit 22 stores, for example, a connection state of the terminal device 40. For example, the storage unit 22 stores a state of radio resource control (RRC), EPS connection management (ECM), or 5G system connection management (CM) of the terminal device 40. The storage unit 22 may function as a home memory that stores position information of the terminal device 40.

The control unit 23 is a controller that controls each unit of the management device 20. The control unit 23 is implemented by, for example, a processor such as a CPU, an MPU, and a GPU. For example, the control unit 23 is implemented by a processor executing various programs stored in a storage device in the management device 20 using a RAM or the like as a work area. Note that, the control unit 23 may be implemented by an integrated circuit such as an ASIC or an FPGA. Any of the CPU, MPU, GPU, ASIC, and FPGA can be regarded as a controller. The control unit 23 may be implemented by a GPU in addition to or instead of the CPU.

### <2-4. Configuration of Base Station>

Next, a configuration of the base station 30 is described.

The base station 30 is a radio communication device that performs the radio communication with the terminal device 40. The base station 30 may be configured to perform the radio communication with the terminal device 40 via the relay station, or may be configured to directly perform the radio communication with the terminal device 40.

The base station 30 is a type of the communication device. More specifically, the base station 30 is a device corresponding to a radio base station (base station, node B, eNB, gNB or the like) or a radio access point. The base station 30 may be a radio relay station. The base station 30 may be an optical extension device referred to as a remote radio head (RRH) or a radio unit (RU). The base station 30 may be a reception station such as a field pickup unit (FPU). The base station 30 may be an integrated access and backhaul (IAB) donor node or an IAB relay node that provides a radio access line and a radio backhaul line by time division multiplexing, frequency division multiplexing, or space division multiplexing.

Note that, the radio access technology used by the base station 30 may be a cellular communication technology or a wireless LAN technology. It goes without saying that the radio access technology used by the base station 30 is not limited thereto, and may be another radio access technology. For example, the radio access technology used by the base station 30 may be a low power wide area (LPWA) communication technology. It goes without saying that the radio communication used by the base station 30 may be radio communication using a millimeter wave. The radio communication used by the base station 30 may be radio communication using a radio wave or radio communication (optical radio) using an infrared ray or visible light. The base station 30 may be capable of performing non-orthogonal multiple access (NOMA) communication with the terminal device 40. Here, the NOMA communication is communication using a non-orthogonal resource (transmission, reception, or both of them). Note that, the base station 30 may be capable of performing the NOMA communication with another base station 30.

Note that, the base stations 30 may be capable of communicating with each other via a base station-core network interface (for example, NG interface, S1 interface and the like). This interface may be either the wired or radio interface. The base stations 30 may be capable of communicating with each other via a base station-base station interface (for example, Xn interface, X2 interface, S1 interface, F1 interface and the like). This interface may be either the wired or radio interface.

Note that, the concept of the base station includes not only a donor base station but also a relay base station (also referred to as a relay station). For example, the relay base station may be any one of an RF repeater, a smart repeater, and an intelligent surface. The concept of the base station is provided with not only a structure having a function of the base station but also a device installed in the structure.

The structure is, for example, a building such as a multistory building, a house, a steel tower, a station facility, an airport facility, a harbor facility, an office building, a school building, a hospital, a factory, a commercial facility, or a stadium. Note that, the concept of the structure includes not only the building but also a non-building structure such as a tunnel, a bridge, a dam, a wall, or an iron pillar, and equipment such as a crane, a gate, or a windmill. The concept of the structure includes not only a structure on the land (on the ground in a narrow sense) or an underground structure, but also a structure on water such as a platform or a megafloat, and an underwater structure such as a marine observation facility. The base station can be rephrased as an information processing device.

The base station 30 may be the donor station or the relay station (relay station). The base station 30 may be a fixed station or a mobile station. The mobile station is the radio communication device (for example, the base station) configured to be movable. At that time, the base station 30 may be a device installed in a mobile body or may be the mobile body itself. For example, the relay station having mobility can be regarded as the base station 30 as the mobile station. A device that originally is a device having mobility and has a function of the base station (at least a part of the function of the base station), such as a vehicle, an unmanned aerial vehicle (UAV) represented by a drone, or a smartphone, also corresponds to the base station 30 as the mobile station.

Here, the mobile body may be a mobile terminal such as a smartphone or a mobile phone. The mobile body may be a mobile body (for example, a vehicle such as an automobile, a bicycle, a bus, a truck, a motorcycle, a train, or a linear motor car) that moves on the land (on the ground in a narrow sense) or a mobile body (for example, subway) that moves underground (for example, in the tunnel). The mobile body may be a mobile body (for example, a ship such as a passenger ship, a cargo ship, or a hovercraft) that moves on water, or a mobile body (for example, a submarine boat such as a submersible, a submarine, and unmanned diving machine) that moves underwater. Note that, the mobile body may be a mobile body (for example, an aircraft such as an airplane, an airship, or a drone) that moves in the atmosphere.

The base station 30 may be a ground base station (ground station) installed on the ground. For example, the base station 30 may be a base station arranged in a structure on the ground, or may be a base station installed in the mobile body moving on the ground. More specifically, the base station 30 may be an antenna installed in the structure such as a building and a signal processing device connected to the antenna. It goes without saying that the base station 30 may be the structure or the mobile body itself. The "ground" is the ground in a broad sense including not only the land (the ground in a narrow sense) but also underground, water surface, and underwater. Note that, the base station 30 is not limited to the ground base station. For example, in a case where the communication system S is a satellite communication system, the base station 30 may be the aircraft station. From the perspective of the satellite station, the aircraft station located on the earth is the ground station.

Note that, the base station 30 is not limited to the ground station. The base station 30 may be a non-ground base station (non-ground station) capable of floating in the air or space. For example, the base station 30 may be the aircraft station or the satellite station.

The satellite station is a satellite station capable of floating outside the atmosphere. The satellite station may be a device mounted on a space mobile body such as an artificial satellite or may be the space mobile body itself. The space mobile body is a mobile body that moves outside the atmosphere. Examples of the space mobile body include artificial celestial bodies such as the artificial satellite, a spacecraft, a space station, and a probe. Note that, the satellite serving as the satellite station may be any of a low Earth orbiting (LEO) satellite, a medium Earth orbiting (MEO) satellite, a geostationary Earth orbiting (GEO) satellite, and a highly elliptical orbiting (HEO) satellite. It goes without saying that the satellite station may be a device mounted on the low Earth orbiting satellite, medium Earth orbiting satellite, geostationary Earth orbiting satellite, or high elliptical orbiting satellite.

The aircraft station is the radio communication device capable of floating in the atmosphere, such as the aircraft. The aircraft station may be a device mounted on the aircraft or the like, or may be the aircraft itself. Note that, the concept of the aircraft includes not only a heavy aircraft such as an airplane and a glider but also a light aircraft such as a balloon and an airship. The concept of the aircraft includes not only the heavy aircraft and light aircraft but also a rotary wing aircraft such as a helicopter and an autogiro. Note that, the aircraft station (or, an aircraft on which the aircraft station is mounted) may be an unmanned aircraft such as the drone.

Note that, the concept of the unmanned aircraft also includes unmanned aircraft systems (UAS) and a tethered UAS. The concept of the unmanned aircraft also includes a lighter than air UAS (LTA) and a heavier than air UAS (HTA). Other concepts of the unmanned aircraft also include high altitude UAS platforms (HAPs).

Coverage of the base station 30 may be as large as a macro cell and as small as a pico cell. It goes without saying that the coverage of the base station 30 may be extremely small such as a femto cell. The base station 30 may have a beamforming capability. In this case, in the base station 30, a cell or a service area may be formed for each beam.

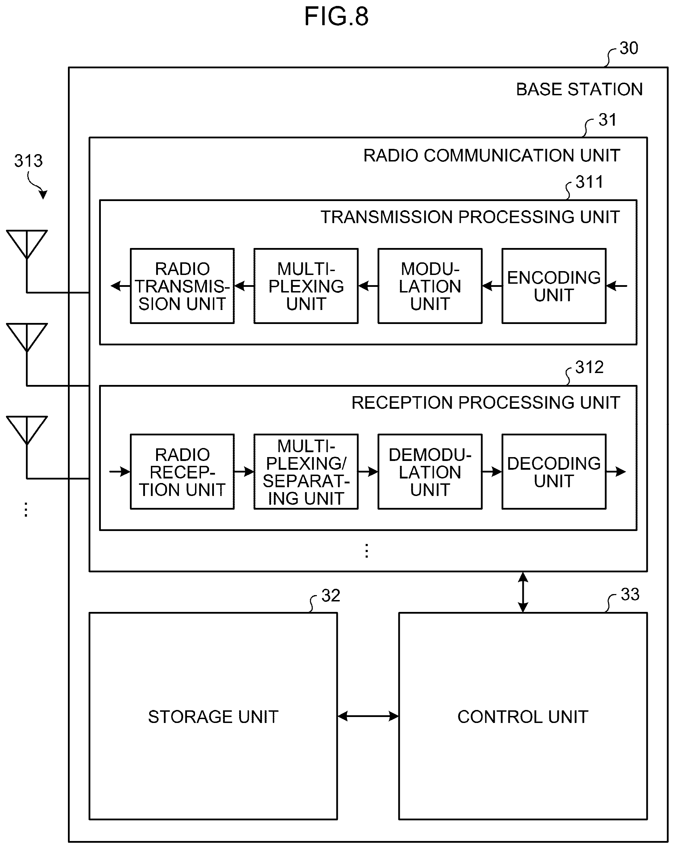

FIG. 8 is a diagram illustrating a configuration example of the base station 30 according to the embodiment of the present disclosure. The base station 30 is provided with a radio communication unit 31, a storage unit 32, and a control unit 33. Note that, the configuration illustrated in FIG. 8 is a functional configuration, and a hardware configuration may be different from this. The functions of the base station 30 may be implemented in a distributed manner in a plurality of physically separated configurations.

The radio communication unit 31 is a signal processing unit for performing radio communication with other radio communication devices (for example, the terminal device 40). The radio communication unit 31 operates under control of the control unit 33. The radio communication unit 31 supports one or a plurality of radio access schemes. For example, the radio communication unit 31 supports both NR and LTE. The radio communication unit 31 may support W-CDMA or cdma2000 in addition to NR or LTE. The radio communication unit 31 may support an automatic retransmission technology such as hybrid automatic repeat request (HARQ).

The radio communication unit 31 is provided with a transmission processing unit 311, a reception processing unit 312, and an antenna 313. The radio communication unit 31 may be provided with a plurality of transmission processing units 311, a plurality of reception processing units 312, and a plurality of antennas 313. Note that, in a case where the radio communication unit 31 supports a plurality of radio access schemes, each unit of the radio communication unit 31 can be configured individually for each radio access scheme. For example, the transmission processing unit 311 and the reception processing unit 312 may be individually configured by LTE and NR. The antenna 313 may include a plurality of antenna elements (for example, a plurality of patch antennas). In this case, the radio communication unit 31 may be configured to be able to perform beamforming. The radio communication unit 31 may be configured to be able to perform polarization beamforming using a vertically polarized wave (V polarized wave) and a horizontally polarized wave (H polarized wave).

The transmission processing unit 311 performs transmission processing of downlink control information and downlink data. For example, the transmission processing unit 311 encodes the downlink control information and the downlink data input from the control unit 33 using an encoding scheme such as block encoding, convolutional encoding, or turbo encoding. Here, the encoding may be performed by polar code or low density parity check code (LDPC code). The transmission processing unit 311 modulates encoded bits by a predetermined modulation scheme such as BPSK, QPSK, 16QAM, 64QAM, or 256QAM. In this case, signal points on a constellation do not necessarily have to be equidistant. The constellation may be a non uniform constellation (NUC). The transmission processing unit 311 multiplexes a modulation symbol of each channel and a downlink reference signal and arranges the same in a predetermined resource element. The transmission processing unit 311 performs various types of signal processing on the multiplexed signal. For example, the transmission processing unit 311 performs processing such as conversion into a frequency domain by fast Fourier transform, addition of a guard interval (cyclic prefix), generation of a baseband digital signal, conversion into an analog signal, orthogonal modulation, up-conversion, removal of an extra frequency component, and power amplification. The signal generated by the transmission processing unit 311 is transmitted from the antenna 313.

The reception processing unit 312 processes an uplink signal received via the antenna 313. For example, the reception processing unit 312 performs down-conversion, removal of an unnecessary frequency component, control of an amplification level, orthogonal demodulation, conversion into a digital signal, removal of guard interval (cyclic prefix), extraction of a frequency domain signal by fast Fourier transform or the like on the uplink signal. The reception processing unit 312 separates an uplink channel and an uplink reference signal such as a physical uplink shared channel (PUSCH) and a physical uplink control channel (PUCCH) from the signals subjected to such processing. The reception processing unit 312 demodulates a reception signal using a modulation scheme such as binary phase shift keying (BPSK) or quadrature phase shift keying (QPSK) with respect to the modulation symbol of the uplink channel. The modulation scheme used for demodulation may be 16 quadrature amplitude modulation (QAM), 64QAM, or 256QAM. In this case, signal points on a constellation do not necessarily have to be equidistant. The constellation may be a non-uniform constellation (NUC). The reception processing unit 312 performs decoding processing on the demodulated encoded bits of the uplink channel. The decoded uplink data and uplink control information are output to the control unit 33.

The antenna 313 is an antenna device (antenna unit) that mutually converts a current and a radio wave. The antenna 313 may include one antenna element (for example, one patch antenna) or may include a plurality of antenna elements (for example, a plurality of patch antennas). In a case where the antenna 313 includes a plurality of antenna elements, the radio communication unit 31 may be configured to be able to perform beamforming. For example, the radio communication unit 31 may be configured to generate a directional beam by controlling directivity of a radio signal using a plurality of antenna elements. Note that, the antenna 313 may be a dual-polarized antenna. In a case where the antenna 313 is the dual-polarized antenna, the radio communication unit 31 may use the vertically polarized wave (V polarized wave) and the horizontally polarized wave (H polarized wave) when transmitting the radio signal. The radio communication unit 31 may control the directivity of the radio signal transmitted using the vertically polarized wave and the horizontally polarized wave. The radio communication unit 31 may transmit and receive spatially multiplexed signals via a plurality of layers including a plurality of antenna elements.

The storage unit 32 is a storage device capable of reading and writing data, such as a DRAM, an SRAM, a flash memory, or a hard disk. The storage unit 32 functions as a storage means of the base station 30.

The control unit 33 is a controller that controls each unit of the base station 30. The control unit 33 is implemented by, for example, a processor such as a CPU or an MPU. For example, the control unit 33 is implemented by a processor executing various programs stored in a storage device in the base station 30 using a RAM or the like as a work area. Note that, the control unit 33 may be implemented by an integrated circuit such as an ASIC or an FPGA. Any of the CPU, MPU, ASIC, and FPGA can be regarded as a controller. The control unit 33 may be implemented by a GPU in addition to or instead of the CPU.

In some embodiments, the concept of the base station may include a set of a plurality of physical or logical devices. For example, in this embodiment, the base station may be distinguished into a plurality of devices such as a baseband unit (BBU) and a radio unit (RU). The base station may be interpreted as an assembly of the plurality of devices. The base station may be either or both of the BBU and RU. The BBU and RU may be connected by a predetermined interface (for example, enhanced common public radio interface (eCPRI)). Note that, the RU may be rephrased as a remote radio unit (RRU) or a radio dot (RD). The RU may support a gNB distributed unit (gNB-DU) to be described later. Moreover, the BBU may support a gNB central unit (gNB-CU) to be described below. Alternatively, the RU may be a radio device connected to a gNB-DU to be described later. The RU connected to the gNB-CU, gNB-DU, and gNB-DU may be configured to conform to an open radio access network (O-RAN). Moreover, the RU may be a device integrally formed with the antenna. An antenna (for example, the antenna integrally formed with the RU) included in the base station may adopt an advanced antenna system and support MIMO (for example, FD-MIMO) or beamforming. The antenna included in the base station may be provided with, for example, 64 transmission antenna ports and 64 reception antenna ports.

The antenna mounted on the RU may be an antenna panel including one or more antenna elements, and the RU may be equipped with one or more antenna panels. For example, the RU may be equipped with two types of antenna panels of a horizontally polarized wave antenna panel and a vertically polarized wave antenna panel, or two types of antenna panels of a right-turn circular polarized wave antenna panel and a left-turn circular polarized wave antenna panel. The RU may form an independent beam for each antenna panel and control.

Note that, a plurality of base stations may be connected to each other. One or a plurality of base stations may be included in a radio access network (RAN). In this case, the base station may be simply referred to as a RAN, a RAN node, an access network (AN), or an AN node. Note that, the RAN in LTE is sometimes referred to as an enhanced universal terrestrial RAN (EUTRAN). The RAN in NR is sometimes referred to as NGRAN. The RAN in W-CDMA (UMTS) is sometimes referred to as UTRAN.

Note that, an LTE base station is sometimes referred to as evolved node B (eNodeB) or eNB. At that time, the EUTRAN includes one or a plurality of eNodeBs (eNBs). An NR base station is sometimes referred to as gNodeB or gNB. At that time, the NGRAN includes one or a plurality of gNBs. The EUTRAN may include a gNB (en-gNB) connected to a core network (EPC) in an LTE communication system (EPS). Similarly, the NGRAN may include an ng-eNB connected to a core network 5GC in a 5G communications system (5GS).

Note that, in a case where the base station is the eNB, gNB or the like, the base station is sometimes referred to as 3GPP access. In a case where the base station is a radio access point, the base station is sometimes referred to as non-3GPP access. Moreover, the base station may be an optical extension device referred to as a remote radio head (RRH) or a radio unit (RU). In a case where the base station is the gNB, the base station may be a combination of the gNB-CU and gNB-DU described above, or may be any one of the gNB-CU and gNB-DU.

Here, the gNB-CU hosts a plurality of upper layers (for example, radio resource control (RRC), service data adaptation protocol (SDAP), and packet data convergence protocol (PDCP)) in an access stratum for communication with the UE. In contrast, the gNB-DU hosts a plurality of lower layers (for example, radio link control (RLC), medium access control (MAC), and physical layer (PHY)) in an access stratum. That is, out of messages/information to be described later, RRC signaling (semi-static notification) may be generated by the gNB-CU, whereas MAC CE and DCI (dynamic notification) may be generated by the gNB-DU. Alternatively, in RRC configuration (semi-static notification), for example, some configurations such as IE: cellGroupConfig may be generated by the gNB-DU, and the remaining configurations may be generated by the gNB-CU. These configurations may be transmitted and received through an F1 interface to be described later.

Note that, the base station may be capable of performing communication with another base station. For example, in a case where a plurality of base stations is the eNBs or a combination of the eNB and en-gNB, the base stations may be connected by the X2 interface. In a case where a plurality of base stations is the gNBs or a combination of the gn-eNB and gNB, the devices may be connected by the Xn interface. In a case where a plurality of base stations is a combination of the gNB-CU and gNB-DU, the devices may be connected by the F1 interface described above. A message/information (for example, RRC signaling, MAC control element (MAC CE), or DCI) to be described later may be transmitted between a plurality of base stations, for example, via the X2 interface, Xn interface, or F1 interface.

A cell provided by the base station is sometimes referred to as a serving cell. The concept of the serving cell includes a primary cell (PCell) and a secondary cell (SCell). In a case where dual connectivity is set in the UE (for example, the terminal device 40), the PCell and zero or one or more SCells provided by a master node (MN) may be referred to as a master cell group. Examples of the dual connectivity include EUTRA-EUTRA dual connectivity, EUTRA-NR dualconnectivity (ENDC), EUTRA-NR dual connectivity with 5GC, NR-EUTRA dual connectivity (NEDC), and NR-NR dual connectivity.

Note that, the serving cell may include a primary secondary cell (PSCell) or a primary SCG cell. In a case where the dual connectivity is set in the UE, the PSCell and zero or one or more SCells provided by the secondary node (SN) may be referred to as a secondary cell group (SCG). Unless specially configured (for example, PUCCH on SCell), the physical uplink control channel (PUCCH) is transmitted by the PCell and PSCell, but is not transmitted by the SCell. A radio link failure is also detected in the PCell and PSCell, but is not detected in the SCell (not necessarily be detected). In this manner, since the PCell and PSCell have a special role in the serving cell, they are also referred to as special cell (SpCell).

In one cell, one downlink component carrier and one uplink component carrier may be associated with one cell. A system bandwidth corresponding to one cell may be divided into a plurality of bandwidth parts (BWPs). In this case, one or a plurality of BWPs may be set in the UE, and one BWP may be used for the UE as an active BWP. Radio resources (for example, a frequency band, numerology (subcarrier spacing), and a slot format (slot configuration) that can be used by the terminal device 40 may be different for each cell, each component carrier, or each BWP.

### <2-5. Configuration of Terminal Device>

Next, a configuration of the terminal device 40 is described. The terminal device 40 can be rephrased as user equipment (UE) 40.

The terminal device 40 is the radio communication device that performs the radio communication with another communication device such as the base station 30. The terminal device 40 is, for example, a mobile phone, a smart device (smartphone or tablet), a personal digital assistant (PDA), or a personal computer. The terminal device 40 may be a device such as a business camera having a communication function, or may be a motorcycle, a moving relay vehicle or the like equipped with a communication device such as a field pickup unit (FPU). The terminal device 40 may be a machine to machine (M2M) device or an Internet of Things (IoT) device.

Note that, the terminal device 40 may be capable of performing the NOMA communication with the base station 30. The terminal device 40 may be capable of using the automatic retransmission technology such as HARQ when communicating with the base station 30. The terminal device 40 may be capable of performing sidelink communication with another terminal device 40. The terminal device 40 may be capable of using the automatic retransmission technology such as HARQ also when performing the sidelink communication. Note that, the terminal device 40 may be capable of performing the NOMA communication also in communication (sidelink) with another terminal device 40. The terminal device 40 may be capable of performing the LPWA communication with another communication device (for example, the base station 30 and another terminal device 40). It goes without saying that the radio communication used by the terminal device 40 may be radio communication using a millimeter wave. Note that, the radio communication (including the sidelink communication) used by the terminal device 40 may be radio communication using radio waves or radio communication (optical radio) using infrared rays or visible light.

The terminal device 40 may be a mobile body device. The mobile body device is a movable radio communication device. At that time, the terminal device 40 may be a radio communication device installed in the mobile body or may be the mobile body itself. For example, the terminal device 40 may be a vehicle that moves on a road such as an automobile, a bus, a truck, or a motorcycle, a vehicle that moves on a rail installed on a track such as a train, or a radio communication device mounted on the vehicle. Note that, the mobile body may be a mobile terminal, or may be a mobile body that moves on the land (on the ground in a narrow sense), underground, on water, or underwater. The mobile body may be a mobile body that moves in the atmosphere such as a drone or a helicopter, or may be a mobile body that moves outside the atmosphere such as an artificial satellite.

The terminal device 40 may be connected to a plurality of base stations or a plurality of cells simultaneously to perform communication. For example, in a case where one base station supports a communication area via a plurality of cells (for example, pCell, sCell), it is possible to bundle the plurality of cells and communicate between the base station 30 and the terminal device 40 by a carrier aggregation (CA) technology, a dual connectivity (DC) technology, and a multi-connectivity (MC) technology. Alternatively, it is also possible that the terminal device 40 and the plurality of base stations 30 communicate with each other by a coordinated multi-point transmission and reception (CoMP) technology via the cells of the different base stations 30.

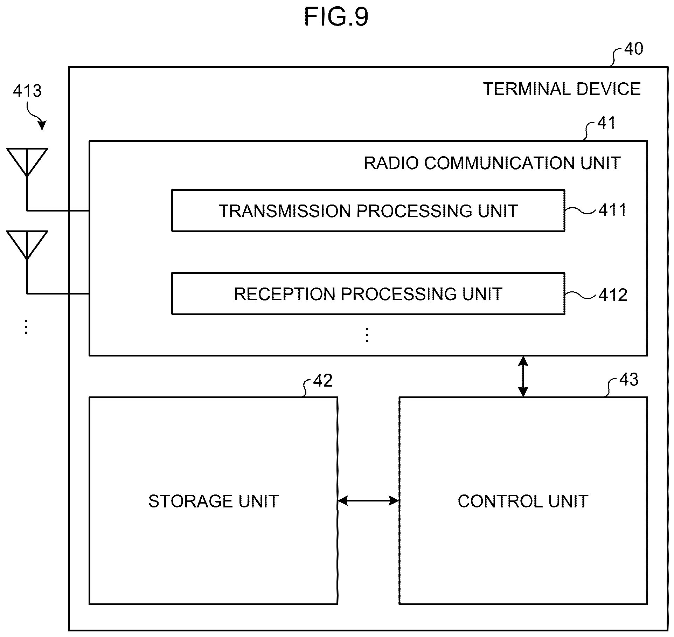

FIG. 9 is a diagram illustrating a configuration example of the terminal device 40 according to the embodiment of the present disclosure. The terminal device 40 is provided with a radio communication unit 41, a storage unit 42, and a control unit 43. Note that, the configuration illustrated in FIG. 9 is a functional configuration, and a hardware configuration may be different from this. The functions of the terminal device 40 may be implemented in a distributed manner in a plurality of physically separated configurations.

The radio communication unit 41 is a signal processing unit for performing the radio communication with other radio communication devices (for example, the base station 30 and another terminal device 40). The radio communication unit 41 operates under control of the control unit 43. The radio communication unit 41 is provided with a transmission processing unit 411, a reception processing unit 412, and an antenna 413. Configurations of the radio communication unit 41, the transmission processing unit 411, the reception processing unit 412, and the antenna 413 may be similar to those of the radio communication unit 31, the transmission processing unit 311, the reception processing unit 312, and the antenna 313 of the base station 30. The radio communication unit 41 may be configured to be able to perform beamforming similarly to the radio communication unit 31. Moreover, similarly to the radio communication unit 31, the radio communication unit 41 may be capable of transmitting and receiving the spatially multiplexed signals.

The storage unit 42 is a storage device capable of reading and writing data, such as a DRAM, an SRAM, a flash memory, or a hard disk. The storage unit 42 functions as a storage means of the terminal device 40.

The control unit 43 is a controller that controls each unit of the terminal device 40. The control unit 43 is implemented by, for example, a processor such as a CPU or an MPU. For example, the control unit 43 is implemented by a processor executing various programs stored in a storage device in the terminal device 40 using a RAM or the like as a work area. Note that, the control unit 43 may be implemented by an integrated circuit such as an ASIC or an FPGA. Any of the CPU, MPU, ASIC, and FPGA can be regarded as a controller. The control unit 43 may be implemented by a GPU in addition to or instead of the CPU.

### <<3. Network Architecture>>

The configuration of the communication system S has been described above, and a network architecture applicable to the communication system S of the present embodiment will be described next.

### <3-1. Configuration Example of 5G Network Architecture>

First, a fifth-generation mobile communication system (5G) architecture will be described as an example of the core network CN of the communication system S.

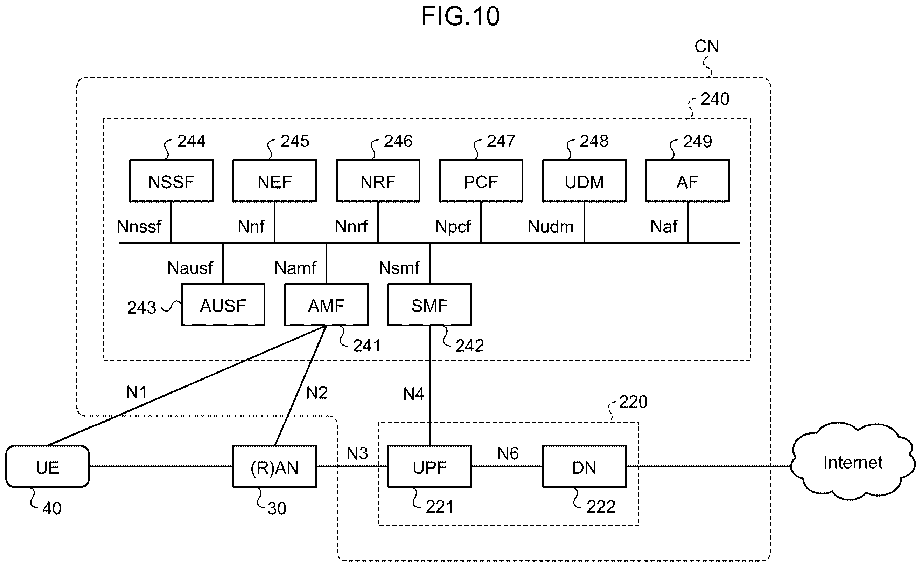

FIG. 10 is a diagram illustrating an example of the 5G architecture. The 5G core network CN is also referred to as 5G core (5GC)/next generation core (NGC). Hereinafter, the 5G core network CN is also referred to as 5GC/NGC.

The core network CN is connected to the user equipment (UE) 40 via a (R)AN 30. The UE 40 is, for example, the terminal device 40.

Note that, the core network CN illustrated in FIG. 10 does not include a management function for managing a plurality of private networks (private network association management (PNAM)), but the core network CN may include the PNAM as one of the network functions. It goes without saying that the PNAM may be a network function located outside the core network CN.

The (R)AN 30 has a function of enabling connection to the radio access network (RAN) and connection to an access network (AN) other than the RAN. The (R)AN 30 includes base stations referred to as gNBs or ng-eNBs.

The core network CN mainly accepts connection and manages session when the UE 40 is connected to the network. The core network CN may include a user plane function group 220 and a control plane function group 240.

The user plane function group 220 includes a user plane function (UPF) 221 and a data network (DN) 222. The UPF 221 has a function of user plane processing. The UPF 221 has a routing/forwarding function of data handled in the user plane. The DN 222 being an entity that provides connection to an operator's own service such as a mobile network operator (MNO), for example, has a function of providing an Internet connection, or providing a connection to a third party service. In this manner, the user plane function group 220 plays a role of a gateway serving as a boundary between the core network CN and the Internet.

The control plane function group 240 includes an access management function (AMF) 241, a session management function (SMF) 242, an authentication server function (AUSF) 243, a network slice selection function (NSSF) 244, a network exposure function (NEF) 245, a network repository function (NRF) 246, a policy control function (PCF) 247, a unified data management (UDM) 248, and an application function (AF) 249.

The AMF 241 has functions such as registration processing, connection management, and mobility management of the UE 40. The SMF 242 has functions such as session management and IP allocation and management of the UE 40. The AUSF 243 has an authentication function. The NSSF 244 has a function regarding selection of a network slice. The NEF 245 has a function of providing network function capabilities and events to the third party, the AF 249, and an edge computing function.

The NRF 246 has a function of finding the network function and holding a profile of the network function. The PCF 247 has a function of policy control. The UDM 248 has a function of generating 3GPP AKA authentication information and processing a user ID. The AF 249 has a function of interacting with the core network to provide a service.

For example, the control plane function group 240 acquires information from the UDM 248 in which the subscriber information of the UE 40 is stored, and determines whether or not the UE 40 may connect to the network. The control plane function group 240 uses contract information of the UE 40 and a key for encryption included in the information acquired from the UDM 248 for such determination. The control plane function group 240 generates the key for encryption and the like.

That is, the control plane function group 240 determines whether or not connection to the network is available according to whether or not information of the UE 40 associated with a subscriber number referred to as international mobile subscriber identity (IMSI) is stored in the UDM 248, for example. Note that, the IMSI is stored in, for example, a subscriber identity module (SIM) card in the UE 40.

Here, Namf is a service-based interface provided by the AMF 241, and Nsmf is a service-based interface provided by the SMF 242. Nnef is a service-based interface provided by the NEF 245, and Npcf is a service-based interface provided by the PCF 247. Nudm is a service-based interface provided by the UDM 248, and Naf is a service-based interface provided by the AF 249. Nnrf is a service-based interface provided by the NRF 246, and Nnssf is a service-based interface provided by the NSSF 244. Nausf is a service-based interface provided by the AUSF 243. Each of these network functions (NFs) exchanges information with another NF via each service-based interface.

N1 illustrated in FIG. 10 is a reference point between the UE 40 and the AMF 241, and N2 is a reference point between the RAN/AN 30 and the AMF 241. N4 is a reference point between the SMF 242 and the UPF 221, and information is exchanged between these network functions (NFs).

As described above, in the core network CN, an interface for transmitting information and controlling functions via an application programming interface (API) referred to as a service-based interface is prepared.

The API specifies a resource and enables GET (resource acquisition), POST (resource creation and data addition), PUT (resource creation, resource update), DELETE (resource deletion) and the like for the resource. Such function is generally used, for example, in the technical field regarding the Web.

For example, the AMF 241, the SMF 242, and the UDM 248 illustrated in FIG. 10 exchange information with one another using the API in a case of establishing a communication session. Conventionally, it is not assumed that an application (for example, AF 249) uses such API. However, when the AF 249 uses such API, the AF 249 can use information of a 5G cellular network, and it is considered that a function of an application can be further evolved.

Note that, an example of the UE 40 in FIG. 10 is the terminal device 40 of the present embodiment. An example of the (R)AN 30 is the base station 30 of the present embodiment. The management device 20 is an example of a device having each function of the core network CN.

### <3-2. Configuration Example of 4G Network Architecture>

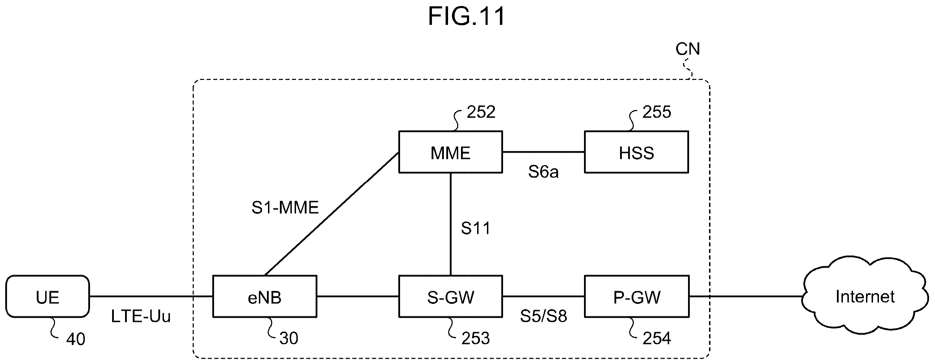

First, a fourth-generation mobile communication system (4G) architecture will be described as an example of the core network CN of the communication system S with reference to FIG. 11. FIG. 11 is a diagram illustrating an example of the 4G architecture. Note that, the core network CN illustrated in FIG. 11 does not include a management function for managing a plurality of private networks (private network association management (PNAM)), but the core network CN may include the PNAM as one of the network functions. It goes without saying that the PNAM may be a network function located outside the core network CN.

As illustrated in FIG. 11, the core network CN includes an eNB 30, a mobility management entity (MME) 252, a serving gateway (S-GW) 253, a packet data network gateway (P-GW) 254, and a home subscriber server (HSS) 255.

The eNB 30 functions as a 4G base station. The MME 252 is a control node that handles control plane signals and manages a moving state of the UE 40. The UE 40 transmits an attach request to the MME 252 in order to attach to the cellular system.

The S-GW 253 is a control node that handles user plane signals, and is a gateway device that switches a transfer path of user data. The P-GW 254 is a control node that handles the user plane signals and is a gateway device serving as a connection point between the core network CN and the Internet. The HSS 255 is a control node that handles the subscriber data and performs service control.

The MME 252 corresponds to the functions of the AMF 241 and the SMF 242 in the 5G network. The HSS 255 corresponds to the function of the UDM 248.

As illustrated in FIG. 11, the eNB 30 is connected to the MME 252 via an S1-MME interface, and is connected to the S-GW 253 via an S1-U interface. The S-GW 253 is connected to the MME 252 via an S11 interface, and the MME252 is connected to the HSS 255 via an S6a interface. The P-GW 254 is connected to the S-GW 253 via an S5/S8 interface.

### <<4. Embodiment>>

The configuration of the communication system S is described above, and an operation of the communication system S having such a configuration is described next.

### <4-1. First Embodiment>

### <4-1-1. Problem>

Conventionally, management of a network is performed by an administrator, and generally, a user U is not allowed to change its environment, settings and the like.

As described above, in the application layer, transition from Web2.0 of central control to Web3.0 of distributed control is predicted. In contrast, in a cellular system operating in a lower layer, central control is the mainstream in terms of connecting networks, and it cannot be said that distributed control is sufficiently studied.

A request for directly connecting a plurality of closed networks without NAT is generated when the users U belonging to the plurality of closed networks communicates with each other on an application. In this manner, direct connection of a plurality of closed networks is required due to the user U.

Therefore, when the application is used, a technology for directly connecting a plurality of closed networks in response to a request of the user U is required. In this manner, it is required to connect the closed networks mainly by the user U. Specifically, a technology for efficiently processing the request of the user U and constructing a network is required.

### <4-1-2. Solution 1>

In the present embodiment, a rule for connection is determined in advance in the communication system S. Hereinafter, the rule will be described.

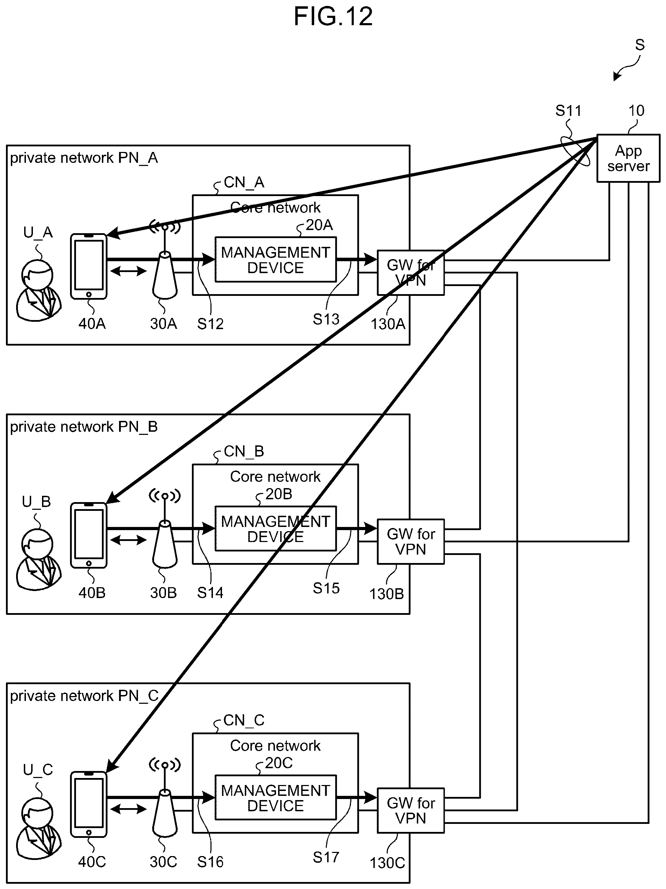

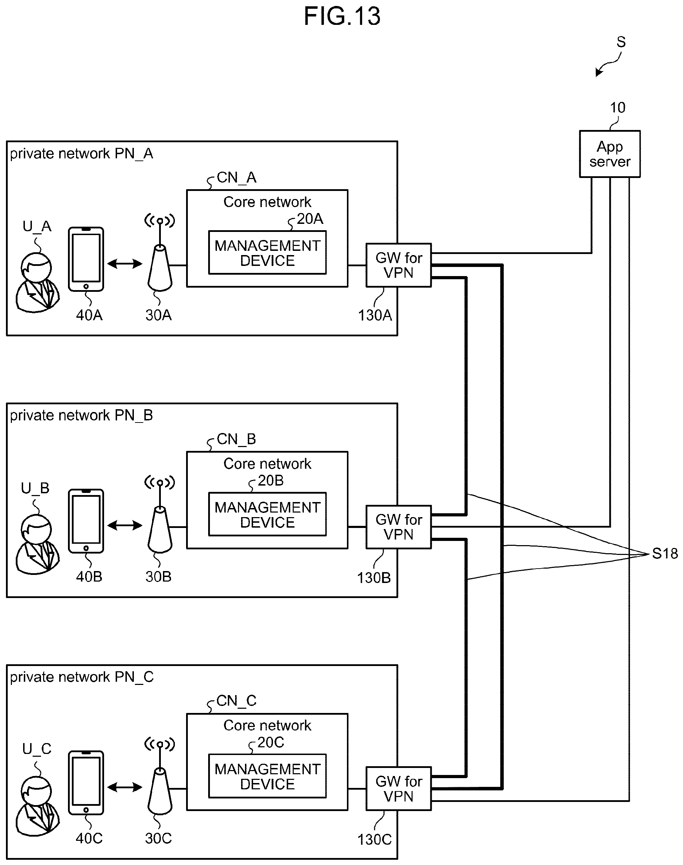

FIGS. 12 and 13 are diagrams illustrating an example of a flow of connection demand processing according to a first embodiment of the present disclosure. The connection demand processing is executed by the communication system S.

As illustrated in FIG. 12, the application server 10 transmits connection demand information (an example of the connection request information) to the terminal devices 40A to 40C (step S11).

In this manner, in the present embodiment, the application server 10 transmits the connection demand information to trigger connection of a plurality of users U. The application server 10 provides the same service to a plurality of users U, such as, for example, a metaverse and a network game.

The application server 10 distributes the connection demand information to the user U in a case of connecting a plurality of users U in the provided service. Specifically, the application server 10 transmits the connection demand information to the application clients (not illustrated) mounted on the terminal devices 40A to 40C used by the users U_A to U_C, respectively. The connection demand information includes information regarding a connection demand with another user U.

For example, it is assumed that the users U_A to U_C play an SNS or a network game in a virtual space. In this case, the application server 10 distributes, to the user U_A, the connection demand information demanding connection to the users U_B and U_C in the private networks PN_B and PN_C to which the users U_B and U_C belong, respectively.

The application server 10 distributes, to the user U_B, the connection demand information demanding connection to the users U_A and U_C in the private networks PN_A and PN_C to which the users U_A and U_C belong, respectively.

The application server 10 distributes, to the user U_C, the connection demand information demanding connection to the users U_A and U_B in the private networks PN_A and PN_B to which the users U_A and U_B belong, respectively.

Table 1 is a table illustrating an example of the connection demand information transmitted from the application server 10 to the user U_A.

**(Table 1)**

| Private network ID | User ID |
|---|---|
| PN_B | U_B |
| PN_C | U_C |

In the example illustrated in Table 1, the connection demand information includes a private network ID and a user ID. The private network ID is information for identifying the private networks PN_B and PN_C to which the user U_B and the user U_C, which are connection destinations, belong. The user ID is information for identifying the users U_B and U_C, which are connection destinations.

This connection demand information is transmitted as, for example, application layer signaling. Therefore, a communication environment for communication between the application server 10 and the terminal devices 40A to 40C may be via a normal public network such as the Internet.

Next, each of the users U_A to U_C transmits a connection instruction for connecting the networks to each of the management devices 20A to 20C on the basis of the connection demand information. The management devices 20A to 20C have a function (private network management function) of managing the private networks PN_A to PN_C.

The management devices 20A to 20C are arranged in the core networks CN_A to CN_C of the private networks PN_A to PN_C, respectively. Alternatively, the management devices 20A to 20C may be arranged in the vicinity of the core networks CN_A to CN_C.

From the viewpoint of security, the management devices 20A to 20C are desirably arranged inside the closed networks of the private networks PN_A to PN_C, respectively.

Specifically, the user U_A transmits a connection instruction to the management device 20A (step S12). The management device 20A instructs the gateway device 130A to set routing in order to establish the VPN (step S13).

In accordance with this instruction, the gateway device 130A sets routing for the held route table. For example, the gateway device 130A sets IP filtering in addition to the setting for establishing VPN connection.

Here, the gateway device 130A sets the IP filtering so that only an IP packet between the users U_B and U_C passes through the gateway device 130A.

Similarly, the user U_B transmits a connection instruction to the management device 20B (step S14). The management device 20B instructs the gateway device 130B to set routing in order to establish the VPN (step S15).

In accordance with this instruction, the gateway device 130B sets routing for the held route table. Here, the gateway device 130B sets the IP filtering so that only an IP packet between the users U_A and U_C passes through the gateway device 130B.

The user U_C transmits a connection instruction to the management device 20C (step S16). The management device 20C instructs the gateway device 130C to set routing in order to establish the VPN (step S17).

In accordance with this instruction, the gateway device 130C sets routing for the held route table. Here, the gateway device 130C sets the IP filtering so that only an IP packet between the users U_A and U_B passes through the gateway device 130C.

Accordingly, as illustrated in FIG. 13, the private networks PN_A to PN_C are directly connected by a VPN tunnel (step S18).

Hereinafter, for example, the gateway device 130A confirms that a source IP address of the IP packet from the user U_A (in other words, the terminal device 40A) of the private network PN_A is that of the user U_A.

Furthermore, the gateway device 130A confirms that a destination IP address of the IP packet is the IP address to the private networks PN_B and PN_C to which the user U_B or the user U_C belongs, respectively.

After confirmation, the gateway device 130A transmits the IP packet to the private network PN_B or the private network PN_C.

The gateway device 130A confirms that a source IP address of the IP packet from the users U_B and U_C (in other words, the terminal devices 40B and 40C) of the private networks PN_B and PN_C is that of the users U_B and U_C.

Furthermore, the gateway device 130A confirms that the destination IP address of the IP packet is that of the user U_A. After confirmation, the gateway device 130A transmits the IP packet to the user U_A.

Note that, the gateway devices 130B and 130C similarly perform IP packet filtering.

As described above, in the communication system S according to the present embodiment, the application server 10 at the center transmits the connection demand information to the terminal device 40 in a central control manner. However, the connection instruction to actually connect between the networks is processed in a distributed manner in each private network PN. In the present embodiment, from the viewpoint of network construction, the network construction is performed by completely distributed control.

Note that, even if the connection instruction is processed in one private network PN_A, communication with the partner (for example, the private network PN_B) cannot always be performed. By processing the connection instruction also in the private network PN_B of the partner, communication between the private networks PN_A and PN_B can be performed.

In this manner, processing of the connection instruction is completed in each of the private networks PN_A to PN_C, and exchange with the partner is not required. Therefore, there is an advantage that a timing of network construction may have a time lag between the private networks PN_A to PN_C.

The communication system S according to the present embodiment is not provided with a central control entity that manages each of the private networks PN_A to PN_C. The application server 10 is not the central control entity that manages each of the private networks PN_A to PN_C. The application server 10 notifies of the users U to be connected to each other, and is different from the central control entity.

As described above, even if the private network PN_A performs settings for performing communication with the users U_B and U_C of the private networks PN_B and PN_C on the basis of the request (connection instruction) of the user U_A, the user U_A cannot always perform communication.

The private networks PN_B and PN_C make settings for performing communication with the user U_A of the private network PN_A on the basis of the requests of the users U_B and U_C, so that the user U_A can communicate with the users U_B and U_C.

This is because, even if the user U_A makes a request, the settings of the private networks PN_B and PN_C of the partner side cannot be changed. That is, even if the user U_A has maliciousness, it is not possible to connect to the users U_B and U_C. In this manner, by connecting the users U by distributed control, the communication between the private networks PNs with high security strength can be implemented.

### <4-1-3. Solution 2>

The application server 10 can transmit information (an example of confirmation information) for proving that the request (connection instruction) from the user U is valid, in other words, has not been falsified, to the management device 20 of the private network PN. As this information, for example, there is a hash value.

That is, the communication system S according to the present embodiment uses, for example, a hash function to prove that the request from the user U is valid. Here, a hash function Y = HashFunction(X) is a function in which Y is uniquely determined from X, but it is difficult to find X from Y.

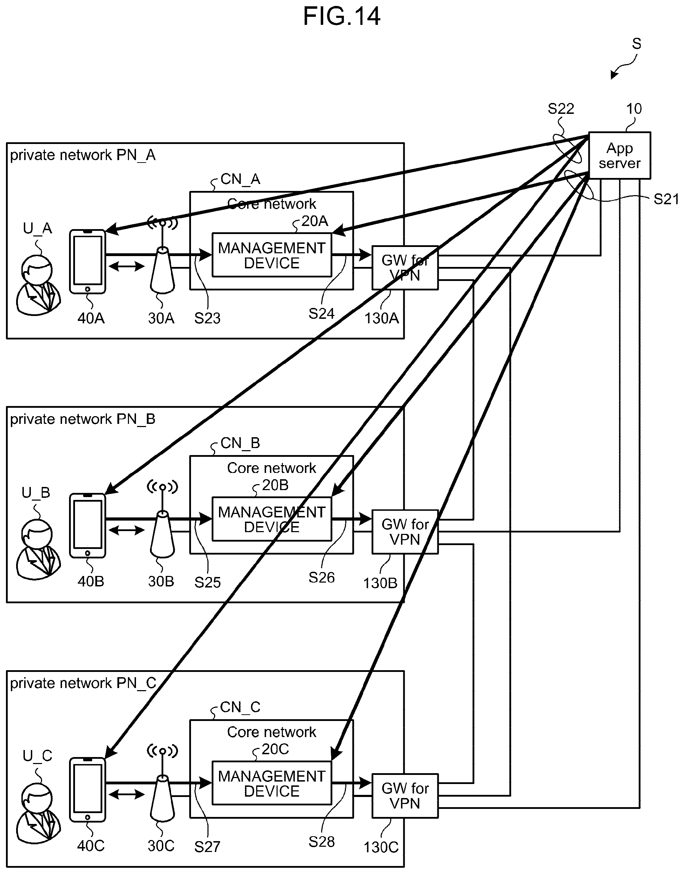

FIG. 14 is a diagram illustrating another example of a flow of connection demand processing according to the first embodiment of the present disclosure. The connection demand processing illustrated in FIG. 14 is executed by the communication system S.

As illustrated in FIG. 14, the application server 10 notifies the management devices 20A to 20C of the private networks PN_A to PN_C, respectively, of first hash information (step S21). The first hash information includes a hash function HashFunction() and hash values Y1 to Y3. The hash values Y1 to Y3 are values obtained when X1 to X3 are input to the hash function HashFunction().

Table 2 is a table illustrating an example of the first hash information notified to the management device 20 according to a second embodiment of the present disclosure.

**(Table 2)**

| Private network ID | Hash function | Output value of Hash function |
|---|---|---|
| PN_A | HashFunction() | Y1 |
| PN_B | HashFunction() | Y2 |
| PN_C | HashFunction() | Y3 |

As illustrated in Table 2, the first hash information is set for each private network PN. The first hash information includes the hash function and an output value of the hash function.

The application server 10 notifies the management device 20A of the first hash information including the hash function HashFunction() and the hash value Y1. The application server 10 notifies the management device 20B of the first hash information including the hash function HashFunction() and the hash value Y2. The application server 10 notifies the management device 20C of the first hash information including the hash function HashFunction() and the hash value Y3.

Next, the application server 10 notifies each of the users U_A to U_C of second hash information including X1 to X3, which are input values (hash values) of the hash function (step S22). The application server 10 may include the second hash information in the connection request information, and may notify of the second hash information separately from the connection request information.

Table 3 is a table illustrating an example of the second hash information notified to the user U according to the second embodiment of the present disclosure.

**(Table 3)**

| Private network ID | Hash function | Input value of Hash function |
|---|---|---|
| PN_A | HashFunction() | X1 |
| PN_B | HashFunction() | X2 |
| PN_C | HashFunction() | X3 |

As illustrated in Table 3, the second hash information is set for each private network PN. The second hash information includes the hash function and the input value of the hash function.

The application server 10 notifies the user U_A (application client of the terminal device 40A) of the second hash information including the hash function HashFunction() and the hash value X1. The application server 10 notifies the user U_B (application client of the terminal device 40B) of the second hash information including the hash function HashFunction() and the hash value X2. The application server 10 notifies the user U_C (application client of the terminal device 40C) of the second hash information including the hash function HashFunction() and the hash value X3.

As illustrated in FIG. 14, the user U_A transmits a connection instruction including the hash value X1 to the management device 20A (step S23).

The management device 20A confirms the validity of the connection instruction using the hash value X1, and instructs the gateway device 130A to set routing in order to establish the VPN in a case where the validity can be confirmed (step S24).

Specifically, the management device 20A inputs the hash value X1 to the hash function HashFunction(), and confirms whether the obtained output value is Y1. In a case where the obtained output value is Y1, the management device 20A recognizes that a transmission source of the connection instruction is the valid user U_A, and instructs the gateway device 130A to establish the VPN.

Similarly, the user U_B transmits a connection instruction including the hash value X2 to the management device 20B (step S25).

The management device 20B confirms the validity of the connection instruction using the hash value X2, and instructs the gateway device 130B to set routing in order to establish the VPN in a case where the validity can be confirmed (step S26).

The user U_C transmits a connection instruction including the hash value X3 to the management device 20C (step S27).

The management device 20C confirms the validity of the connection instruction using the hash value X3, and instructs the gateway device 130C to set routing in order to establish the VPN in a case where the validity can be confirmed (step S28).

Thereafter, processing similar to that in FIG. 12 is performed in the gateway device 130, and the private networks PN_A to PN_C are directly connected by the VPN tunnel.

In this manner, the management device 20 may authenticate the connection instruction by using the hash function. Note that, in the above-described example, the allocation of the combination of the hash values X and Y is changed for each terminal device 40, but the allocation of the hash values X and Y is not limited thereto.

For example, a combination of different hash values X and Y can be allocated even in one terminal device 40. For example, the application server 10 may allocate different combinations of hash values X and Y for each application.

In this case, the application server 10 transmits, for example, a first hash value X11 for a first application and a second hash value X12 for a second application to the same terminal device 40. The application server 10 transmits Y11 as an output value corresponding to the first hash value X11, and Y12 as an output value corresponding to the second hash value X12 to the management device 20 together with the hash function for calculating the output value.

Accordingly, the communication system S can construct its own network for each application. That is, for the first application, a first network in which the users U in the plurality of private networks PN can directly communicate is constructed. Furthermore, for the second application, a second network in which the users U in the plurality of private networks PN can directly communicate is constructed.

The first network and the second network are not constructed by permission of a central management function, but are each independently constructed in an autonomously distributed manner.

Note that, at least one of the private network PN and the user U included in the first network and at least one of the private network PN and the user U included in the second network may be the same or different.

### <4-1-4. Effect>

As described above, the communication system S according to the present embodiment can connect the closed networks not in a central control manner but in an autonomously distributed manner. The communication system S can connect the closed networks of a cellular network constructed by any one of different times, different regions, and different capitals in an autonomously distributed manner according to a request of an application. This makes it possible to efficiently construct a more secure cellular network at low cost.

### <4-2. Second Embodiment>

### <4-2-1. Problem>

In a case where the distributed control is performed not by the central control management entity as in the first embodiment, it is important to determine what operation is performed under what condition among users U. This agreement can be concluded between the users U as, for example, a contract (an example of connected terminal information).

In a case of a cellular system, the order in which the user U connects to a network varies. The order in which a closed network such as a private network PN is installed in a communication system S also varies. The closed networks are connected at various timings.

In such a case, a set contract (condition) can greatly affect performance of network construction and usability of the user U.

### <4-2-2. Solution>

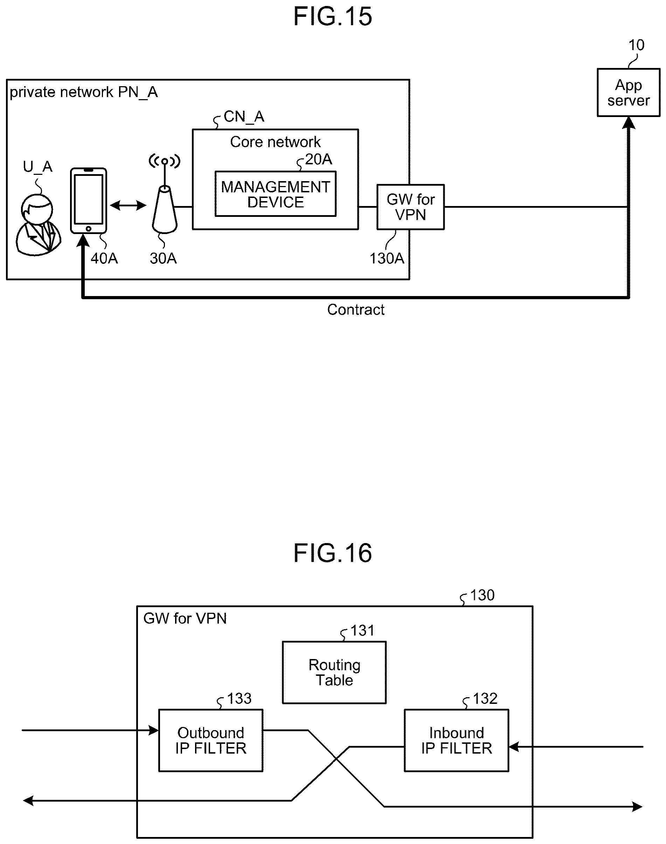

FIG. 15 is a diagram for describing an example of a contract according to a second embodiment of the present disclosure. FIG. 15 illustrates an example in which a contract is concluded between a user U_A (in other words, a terminal device 40A used by the user U_A) of a private network PN_A and an application server 10. The user U_A (terminal device 40A) determines, for example, whether or not to connect to a terminal device 40 on the basis of the contract.

In the following, in order to simplify the description, the contract concluded by the user U_A will be described; however, a similar contract may be concluded between users U_B and U_C of private networks PN_B and PN_C, respectively, and the application server 10.

### (Contract Procedure Example)

An example of a basic contract include the following. For example, the contract is concluded in advance between the user U_A and the application server 10. For example, the application server 10 presents a plurality of contract methods. The user U_A selects one of the plurality of contract methods via an application client of the terminal device 40, and returns a selected content to the application server 10. This procedure may be performed offline or online.

An example of the contract method will be described below.

### (Contract Method CM1)

A contract method CM1 is a method of allowing communication with a specific determined user U via a network of layer 3 or layer 2 VPN connection. Examples of the specific determined user U include a user U playing the same network game and the like.

In other words, in the contract (hereinafter, also referred to as a contract C1) determined by the contract method CM1, a partner (user U) with whom communication can be performed by connecting closed networks is defined. All the users U who are not accepted by the contract C1 are recognized as the partners to whom the terminal device 40A does not desire to connect.

Here, the partner connection to whom is not desired means a partner connection to whom is not desired using a private IP address by layer 3 or layer 2 VPN connection of the closed networks. Therefore, the user U_A (terminal device 40A) can communicate also with a partner that is not accepted by the contract C1, in other words, connection to whom is not desired, for example, via the Internet.

Table 4 is a table illustrating an example of the contract C1 according to the second embodiment of the present disclosure.

**(Table 4)**

| Accepted user ID |
|---|
| U_B,U_C |

The contract C1 includes information (user ID) for identifying the user U accepted to connect. In the example of Table 4, user IDs (U_B and U_C) of the users U_B and U_C, respectively, are included in this contract as the users U who are accepted to connect to the user U_A.

### (Contract Method CM2)

A contract method CM2 is a method of not allowing communication with a specific determined user U via a network of layer 3 or layer 2 VPN connection.

In other words, in the contract method CM2, a partner (user U) with whom communication is not allowed by connecting closed networks is defined. All the users U included in the contract (hereinafter, also referred to as a contract C2) determined by the contract method CM2, that is, the users U who are not accepted to connect are recognized as the partners to whom the terminal device 40A does not desire to connect. In contrast, the user U who is not registered in the contract C2 is regarded as a partner with whom communication may be performed by connecting the closed networks.

Here, the partner connection to whom is not desired means a partner connection to whom is not desired using a private IP address by layer 3 or layer 2 VPN connection of the closed networks. Therefore, the user U_A (terminal device 40A) can communicate also with a partner included in the contract C1, in other words, connection to whom is not desired, for example, via the Internet.

Table 5 is a table illustrating an example of the contract C2 according to the second embodiment of the present disclosure.

**(Table 5)**

| Accepted user ID |
|---|
| U_E,U_F |

The contract C2 includes information (user ID) for identifying the user U not accepted to connect. In the example of Table 5, user IDs (U_E and U_F) of the users U_E and U_F, respectively, are included in the contract C2 as the users U who are not accepted to connect to the user U_A.

The user U_A may select and use one of the contracts C1 and C2. A contract may be concluded by a different contract method for each user U. For example, the user U_A of the private network PN_A may select the contract defined by the contract method CM1, and the user U_B of the private network PN_B may select the contract defined by the contract method CM2.

A plurality of users U_A included in one private network PN_A may conclude a contract by the same contract method (for example, the contract method CM1), or may conclude a contract by different methods. Note that, in a case where a contract is concluded by a different contract method, it is necessary to pay attention so that an inconsistent contract is not created.

Here, in the present embodiment, the contract is concluded not for each administrator of the private network PN but for each user U. This is because the users U allowed to directly communicate is determined by the application as a starting point. The application that provides a service such as a network game or an SNS in the metaverse connects the user U and the user U.

In this manner, the users U allowed to directly communicate is determined by the application as a starting point. Therefore, in the present embodiment, a contract is concluded with the application server 10 for each user U.

In a conventional public cellular network, a roaming contract is concluded to accept use of the network between different companies. Roaming is a contract that allows the user U to use a public cellular network within the coverage of radio waves of other companies as the user U moves.

In contrast, in the contract according to the present embodiment, acceptance for the user U in the closed network to directly communicate with another user U in another closed network is electronically determined in advance.

Note that, in the above-described example, a contract is concluded for each user U, in other words, for each terminal device 40, but a unit of concluding a contract is not limited to the terminal device 40. For example, the user U (terminal device 40) may conclude different contracts with the application server 10 for each application.

Table 6 is a table illustrating an example of a contract C3 according to the second embodiment of the present disclosure.

**(Table 6)**

| Application No. | Accepted user ID |
|---|---|
| AP_A | U_B,U_C |
| AP_B | U_J,U_T |
| AP_C | U_E,U_Q |

The contract C3 includes information (application number) for identifying the application and information (user ID) for identifying the user U accepted to connect.

In the example of Table 6, in the application AP_A, user IDs (U_B and U_C) of the users U_B and U_C, respectively, are included in this contract C3 as the users U accepted to connect to the user U_A. In the application AP_B, user IDs (U_J and U_T) of users U_J and U_T, respectively, are included in this contract C3 as the users U accepted to connect to the user U_A. In the application AP_C, user IDs (U_E and U_Q) of the users U_E and U_Q, respectively, are included in this contract C3 as the users U accepted to connect to the user U_A.

Note that, although the contract C3 defined by the contract method CM1 is herein illustrated, the contract C3 may be defined by the contract method CM2. In other words, the contract C3 might include information for identifying the application and information for identifying the user U not accepted to connect.

For example, depending on a type of the application, there is a case where it is desired to communicate with many users U via a network in which the closed networks are connected, and a case where it is desired to communicate with a limited user U. For example, in a case of factory control, inter-bank transaction and the like, the user U is desired to perform communication by connecting only to a very limited partner.

In this manner, even in a case where the user U performs communication in the network in which the closed networks are connected using the same one terminal device 40, it is conceivable that a range of the partners to which the user U desires to connect varies depending on the application. Therefore, in the contract C3, the user U of which connection is accepted (or not accepted) is set for each application. Accordingly, the terminal device 40 can identify the user U to be automatically connected for each application.

Note that, in each of the contracts described above, the user U accepted/not accepted to be connected is specified, but a content specified by the contract is not limited to the user U. For example, a connection method (connection form) may be specified by a contract. Examples of the connection method (connection form) include a layer to be connected and whether or not NAT is used.

Table 7 is a table illustrating an example of a contract C4 according to the second embodiment of the present disclosure. The contract C4 illustrated in Table 7 is obtained by adding information regarding the connection method to the contract C3 in Table 6.

**(Table 7)**

| Application No. | Accepted user ID | Accepted connection methodology |
|---|---|---|
| AP_A | U_B,U_C | Layer 2 VPN without NAT |
| AP_B | U_J,U_T | Layer 3 VPN without NAT |
| AP_C | U_E,U_Q | Layer 3 VPN with NAT |

The contract C4 includes information regarding the connection method in addition to the information (application number) for identifying the application and the information (user ID) for identifying the user U accepted to connect. The connection method here is the connection method performed (allowed) at the time of connection.

In the example in Table 6, in the application AP_A, layer 2 connection and non-use of NAT are specified as the connection method. In the application AP_B, layer 3 connection and non-use of NAT are specified as the connection method. In the application AP_C, layer 3 connection and use of NAT are specified as the connection method.

Note that, although the contract C4 in which the information regarding the connection method is added to the contract C3 is herein illustrated, the information regarding the connection method can be similarly added to the contracts C1 and C2.

The contract (contract) is performed electronically on the basis of a contract signed in advance. That is, when a certain condition is reached, the contract is automatically performed. At that time, validity of contraction execution as to which contract is executed may be verified later by using a technology such as a blockchain.

The blockchain is a technology for determining whether a transaction is valid by monitoring by a plurality of persons and a majority decision. This monitoring and decision is referred to as mining or proof of work and the like.

For example, in the present embodiment, client applications of a plurality of users U (terminal devices 40) inside and outside the private network PN might perform mining for determining validity of processing (transaction, herein execution). In this manner, a plurality of users U may monitor whether a connection demand based on the contract has been correctly performed.

Generally, distributed control and blockchain are considered to be compatible. The communication system S according to the present embodiment can record under which condition connection has been made using this blockchain technology. Accordingly, the communication system S can monitor unauthorized connection to the network by an unauthorized user U by recording such that unauthorized connection is not performed.

### (Contract Execution Procedure)

Conditions under which the above-described contract is executed will be described. After connecting to the application server 10, the user U_A (terminal device 40A) acquires connection demand information for network connection. Reception of the connection demand information is a trigger condition for contract execution.

Next, the terminal device 40A examines (determines) to which network this is connected on the basis of the contract. The terminal device 40A (alternatively, an application installed in the terminal device 40A) determines a network to which this may connect on the basis of a protocol. The contract is established at a timing when this determination is made, and the terminal device 40A transmits a request for network connection.

That is, the trigger for executing the contract is that the terminal device 40 receives the connection demand information transmitted from the application server 10. The connection demand information includes, as a condition, information indicating to which user U is connected by which application. The terminal device 40 confirms the condition included in the connection demand information, and determines whether to transmit a request for network connection on the basis of the contract concluded in advance.

### <4-2-3. Effect>

As described above, according to the present embodiment, the communication system S can automatically connect the closed networks on the basis of the contract. Accordingly, the communication system S can flexibly construct networks having different characteristics. Because the communication system S flexibly constructs a dedicated network when necessary, resources of network device can be economized, and a risk of security leakage can be reduced.

### <4-3. Third Embodiment>

### <4-3-1. Problem>

A mechanism for enabling efficient communication between users U of a plurality of private networks PN is required on the basis of a contract held by the user U. In particular, it is required that the users U can be connected to each other in as short time as possible after a terminal device 40 transmits a request for connection processing on the basis of a demand from an application server 10. A communication system S is required to firmly block the communication of the user U not accepted while constructing a network by distributed control.

### <4-3-2. Solution>

The communication system S according to the present embodiment connects the private networks PN using the existing VPN technology. As described above, the communication system S prepares at least one VPN gateway (corresponding to the above-described gateway device 130) for each private network PN.

The VPN gateway is basically a router. The VPN gateway determines, on the basis of a range of Destination IP Address of an IP packet, to which private network PN the IP packet is transferred. The VPN gateway is a router that routes the IP packet without converting a private IP address thereof.

In order to connect to another private network PN, the private network PN is provided with at least one VPN gateway. In a case where the private network PN does not have the VPN gateway, the VPN gateway is prepared.

At step S13 in FIG. 12 described above, a management device 20A instructs a gateway device 130A (VPN gateway) to set routing. Therefore, the gateway device 130A is required to be prepared by this timing. In addition, the routing setting is performed after the user U determines to connect on the basis of the contract.

The gateway device 130 may be created after a communication request (connection processing request) comes to the management device 20, but it takes time to create, it is desirable to create the same before the request comes. In this case, the gateway device 130 can be created as an entity referred to as a VPN gateway on a cloud, for example.

In this manner, after the VPN gateway device 130 is created in the private network PN, the management device 20 adds the routing setting to the gateway device 130 in response to a request from the user U (terminal device 40) according to the contract.

The private network PN accepts/does not accept a packet on the basis of IP filtering before and after the gateway device 130 so that unnecessary communication is not accepted.

As described above, on the basis of the connection demand information transmitted from the application server 10, in a case of matching with the contract, the user U (terminal device 40) transmits a connection instruction to instruct (require) that the management device 20 performs the connection processing via the application installed in the terminal device 40. The management device 20 to which the terminal device 40 transmits the connection instruction is the VPN gateway control entity that controls the gateway device 130.

The connection demand information includes, for example, a port number used by the application in addition to information regarding the private network PN to be connected. The connection demand information includes the IP address of the terminal device 40 of a connection partner.

The management device 20 transfers the connection instruction from the terminal device 40 to the gateway device 130. The connection instruction includes, similarly to the connection demand information, for example, a port number used by the application and the IP Address of the terminal device 40 of the connection partner in addition to the information regarding the private network PN to be connected.

FIG. 16 is a diagram illustrating an example of the gateway device 130 according to the third embodiment of the present disclosure. The gateway device 130 illustrated in FIG. 16 is provided with a routing table 131, an inbound IP filter 132, and an outbound IP filter 133.

In the inbound IP filter 132, the IP address of a partner user included in the connection demand information received by the terminal device 40 is set as a source IP address. A port number included in the connection demand information is set in the inbound IP filter 132. In the inbound IP filter 132, the IP address of the terminal device 40 that transmits the connection instruction is set as the destination IP address.

The inbound IP filter 132 allows an IP packet to pass, the IP packet having an IP address in which the source IP address is set, the port number in which the port is set, and an IP address in which the destination IP address is set. The inbound IP filter 132 discards the other IP packets.

In the outbound IP filter 133, the IP address of the terminal device 40 that transmits the connection instruction is set as the source IP address. The port number included in the connection demand information is set in the outbound IP filter 133. In the outbound IP filter 133, the IP address of the partner user included in the connection demand information received by the terminal device 40 is set as the destination IP address.

The outbound IP filter 133 allows an IP packet to pass, the IP packet having an IP address in which the source IP address is set, the port number in which the port is set, and an IP address in which the destination IP address is set. The outbound IP filter 133 discards the other IP packets.

The routing table 131 holds routing settings. As the routing setting, for example, in a case where an IP packet addressed to the terminal device 40 of the contracted user U (destination IP address) arrives, there is a setting of a route for transferring the IP packet toward a UPF 221 of a core network CN to which a base station 30 communicating with the terminal device 40 is connected.

As another setting, for example, there is a setting in which, when the IP address of the terminal device 40 of the user U of the connection partner is included in the destination IP address, the IP packet is transferred (routed) in a direction of the corresponding private network PN (that is, to which the terminal device 40 of the connection partner is connected).

Conventionally, setting of the routing table 131 and setting of the IP filters (the inbound IP filter 132 and the outbound IP filter 133) have been performed in advance by a network administrator. In contrast, in the present embodiment, for example, the user U (more specifically, the terminal device 40 used by the user U) leads the settings on the basis of the contract. Accordingly, in the present embodiment, the network is constructed in an autonomously distributed manner for use in a predetermined application.

As described above, in the present embodiment, connection to another user U is performed for each application executed by the terminal device 40. Even if the connection processing with another user U is completed in one private network PN, the terminal device 40 cannot directly communicate with another user U (another terminal device 40) until the connection processing in another private network PN to which another user U belongs is completed.

Therefore, in the present embodiment, the terminal device 40 the connection processing of which is completed notifies the application server 10 of the completion and acquires a connection status of another terminal device 40 from the application server 10.

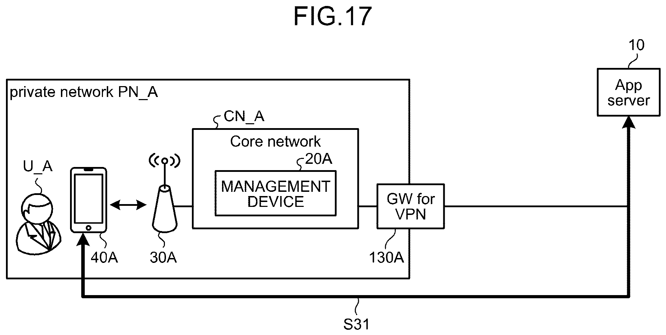

FIG. 17 is a diagram illustrating an example of notification processing according to the third embodiment of the present disclosure. FIG. 17 illustrates the notification processing between a user U_A (in other words, a terminal device 40A used by the user U_A) of a private network PN_A and the application server 10. The notification processing in FIG. 17 is executed by the communication system S after the connection demand processing in FIGS. 12 and 13.

In the following, in order to simplify the description, the notification processing between the user U_A and the application server 10 will be described; however, similar notification processing is performed between users U_B and U_C of private networks PN_B and PN_C, respectively, and the application server 10.

As illustrated in FIG. 17, the terminal device 40A notifies that the connection processing (connection demand processing) with the private networks PN_B and PN_C is completed, and acquires the connection statuses of other private networks PN_B and PN_C from the application server 10 (step S31).

For example, the terminal device 40A acquires a notification indicating that the connection processing is completed from the gateway device 130A via the management device 20A. Thereafter, the terminal device 40A notifies the application server 10 that the connection processing has been completed. Alternatively, when transmitting the connection instruction to the management device 20A, the terminal device 40A may transmit a notification indicating that the connection instruction has been transmitted to the application server 10.

The application server 10 notifies the terminal device 40A of the connection status of the other private networks PN_B and PN_C. The application server 10 notifies the connection status in accordance with a request from the terminal device 40A. Alternatively, in a case of receiving notification of completion of the connection processing from the terminal devices 40B and 40C, the application server 10 may notify of this as the connection status.

The terminal device 40A directly communicates with the other private networks PN_B and PN_C on the basis of the connection status acquired from the application server 10.

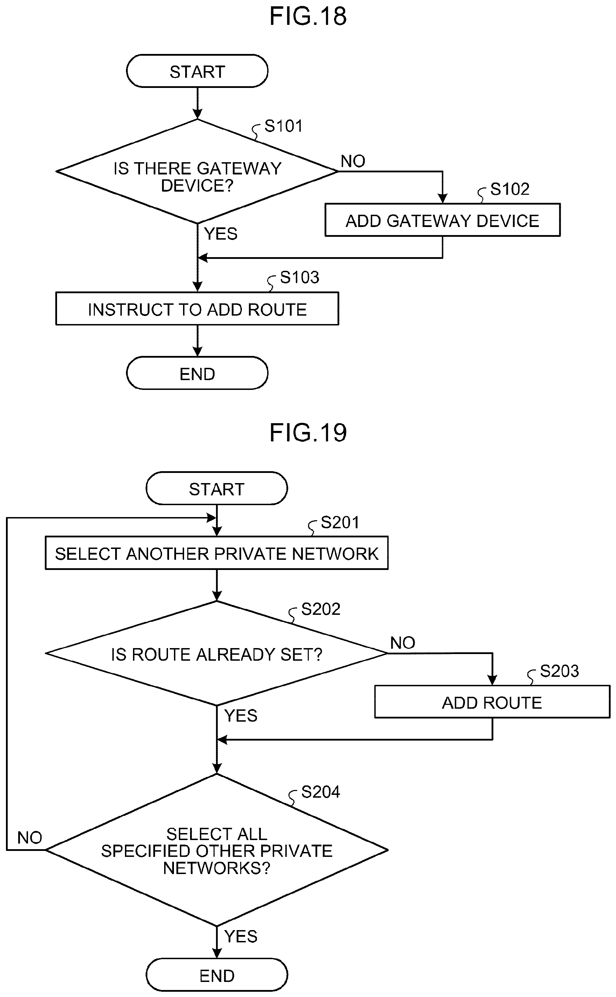

FIG. 18 is a flowchart illustrating an example of a flow of the connection processing executed by the management device 20 according to the third embodiment of the present disclosure. The connection processing illustrated in FIG. 18 is executed by the management device 20 when the connection instruction is received from the terminal device 40.

As illustrated in FIG. 18, the management device 20 first determines whether the gateway device 130 is in the private network PN (step S101). In a case where there is no gateway device 130 (step S101; No), the management device 20 adds the gateway device 130 to the private network PN (step S102).

In a case where there is the gateway device 130 (step S101; Yes), the management device 20 instructs the gateway device 130 to add a route (routing setting) (step S103).

FIG. 19 is a flowchart illustrating an example of a flow of routing setting processing according to the third embodiment of the present disclosure. The routing setting processing illustrated in FIG. 19 is executed by the gateway device 130 upon receiving a routing addition instruction from the management device 20.

As illustrated in FIG. 19, the gateway device 130 selects another unselected private network PN from among one or more other private networks PN specified as the connection partner (step S201).

The gateway device 130 determines whether the route is already set between the same and the selected private network PN (step S202).

In a case where the route is not set (step S202; No), the gateway device 130 adds the route (step S203).

For example, the gateway device 130 adds the routing setting between the same and another selected private network PN to the routing table 131.

In contrast, in a case where the route is already set (step S202; Yes), the gateway device 130 determines whether all the specified other private networks PN are selected (step S204).

In a case where there is another unselected private network PN among the other private networks PN specified as the connection destination (step S204; No), the gateway device 130 returns to step S201.

In a case where all the specified other private networks PN are selected (step S204; Yes), the gateway device 130 determines that all the routing settings are completed, and finishes the processing.

### <4-3-3. Effect>

As described above, the communication system S according to the present embodiment can automatically construct the network on the basis of the contract. As a result, the communication system S can suppress the risk of information leakage, enhance security, and quickly construct a network.

The communication system S can construct a network for each terminal device 40 used by the user U or for each application executed by the terminal device 40. As a result, the user U can enjoy provision of an application service in a network environment more suitable for the application.

### <<5. Other Embodiments>>

The above-described embodiments are examples, and various modifications and applications are possible.

The control device that controls the application server 10, the management device 20, the base station 30, or the terminal device 40 of the present embodiment may be implemented by a dedicated computer system or a general-purpose computer system.

For example, a communication program for executing the above-described operation is stored and distributed in a computer-readable recording medium such as an optical disk, a semiconductor memory, a magnetic tape, or a flexible disk. For example, the program is installed in a computer, and the above-described processing is executed to configure the control device. At that time, the control device may be a device (for example, a personal computer) outside the application server 10, the management device 20, the base station 30, or the terminal device 40. The control device may be a device (for example, the control unit 13, the control unit 23, the control unit 33, or the control unit 43) inside the application server 10, the management device 20, the base station 30, or the terminal device 40.

The above-described communication program may be stored in a disk device provided in a server device on a network such as the Internet so that the communication program can be downloaded to a computer. The above-described functions may be implemented by cooperation of an operating system (OS) and application software. In this case, a portion other than the OS may be stored in a medium and distributed, or a portion other than the OS may be stored in the server device and downloaded to the computer.

Out of each processing described in the above-described embodiments, an entire or a part of the processing described as being performed automatically can be performed manually, or an entire or a part of the processing described as being performed manually can be performed automatically by a known method. The procedure, specific names, and information including various data and parameters described in the above-described document and illustrated in the drawings can be optionally changed unless otherwise specified. For example, the various types of information illustrated in each drawing are not limited to the illustrated information.

Each component of each device illustrated in the drawings is functionally conceptual, and is not necessarily physically configured as illustrated in the drawings. That is, a specific form of distribution and integration of each device is not limited to the illustrated form, and an entire or a part thereof can be functionally or physically distributed and integrated in any unit according to various loads, usage conditions and the like. Note that, this configuration by distribution and integration may be performed dynamically.

The above-described embodiments can be appropriately combined within a range in which the processing contents do not contradict each other. The order of each step illustrated in the flowchart and the like of the above-described embodiments can be changed as appropriate.

For example, the present embodiment can be implemented as any configuration forming a device or a system, for example, a processor as a system large scale integration (LSI) or the like, a module using a plurality of processors or the like, a unit using a plurality of modules or the like, a set obtained by further adding other functions to the unit or the like (that is, a configuration of a part of the device).

Note that, in the present embodiment, the system means a set of a plurality of components (devices, modules (parts) and the like), and it does not matter whether or not all the components are in the same housing. Therefore, a plurality of devices housed in separate housings and connected via a network and one device in which a plurality of modules is housed in one housing are both systems.

For example, the present embodiment can adopt a configuration of cloud computing in which one function is shared by a plurality of devices to process in cooperation via a network.

### <<6. Conclusion>>

Although the embodiments of the present disclosure are described above, the technical scope of the present disclosure is not limited to each embodiment described above as it is, and various modifications can be made without departing from the gist of the present disclosure. The components of different embodiments and variations may be appropriately combined.

The effects in each embodiment described in the present specification are merely examples and are not limited, and there may be other effects.

Note that, the present technology can also have the following configurations.
(1) A terminal device comprising:
   a communication unit that communicates with a base station arranged in a first private network; and
   a control unit that acquires connection request information with another terminal device connected to a second private network different from the first private network, and
   requires that an information processing device arranged in the first private network perform connection processing for connecting to the another terminal device on the basis of the connection request information, wherein
   the information processing device performs the connection processing for connecting to the second private network on the basis of the request.
(2) The terminal device according to (1), wherein a first operator that manages the first private network is different from a second operator that manages the second private network.
(3) The terminal device according to (1) or (2), wherein the connection request information includes network information indicating the second private network and terminal information indicating the another terminal device.
(4) The terminal device according to any one of (1) to (3), wherein the connection request information includes confirmation information for confirming validity of the request for the connection processing.
(5) The terminal device according to (4), wherein the confirmation information includes a value calculated on the basis of a hash function.
(6) The terminal device according to any one of (1) to (5), wherein the control unit determines whether or not to connect to the another terminal device on the basis of connected terminal information regarding a connection destination.
(7) The terminal device according to (6), wherein the connected terminal information includes at least one of connection acceptance information regarding the another terminal device the connection of which is accepted, connection form information regarding connection, and non-connectable information regarding the another terminal device the connection of which is rejected.
(8) The terminal device according to (7), wherein the connection form information includes at least one of translation information indicating whether or not network address translation is performed and layer information regarding a layer to be connected.
(9) The terminal device according to any one of (6) to (8), wherein the connected terminal information is set for each terminal device or for each application executed by the terminal device.
(10) The terminal device according to any one of (1) to (9), wherein the connection processing includes an instruction to add routing information to the second private network to a gateway device of the first private network.
(11) The terminal device according to (10), wherein the information processing device requires that the first private network install the gateway device in a case where the gateway device is not installed in the first private network.
(12) The terminal device according to (10) or (11), wherein the gateway device omits adding processing of the routing information in a case of already holding the routing information to the second private network, and performs adding processing of the routing information according to the instruction in a case of not holding the routing information.
(13) The terminal device according to any one of (10) to (12), wherein the control unit connects to the another terminal device by using a filtering function of a port of the gateway device.
(14) The terminal device according to (13), wherein the gateway device performs, by using at least one of an IP address of a packet transmitted by the another terminal device and an IP address of a packet transmitted by the terminal device, filtering of the packet.
(15) The terminal device according to any one of (1) to (14), wherein the control unit acquires the connection request information from an application server.
(16) The terminal device according to (15), wherein the control unit notifies the application server that preparation for connection with the another terminal device is completed.
(17) The terminal device according to (15) or (16)a, wherein the control unit
   acquires notification indicating that the another terminal device completes preparation of connection to the terminal device itself from the application server, and starts communication with the another terminal device after notifying the application server that preparation of connection to the another terminal device is completed.
(18) A communication method comprising:
   communicating with a base station arranged in a first private network;
   acquiring connection request information with another terminal device connected to a second private network different from the first private network; and
   requiring that an information processing device arranged in the first private network perform connection processing for connecting to the another terminal device on the basis of the connection request information, wherein
   the information processing device performs the connection processing for connecting to the second private network on the basis of the request.
(19) An information processing device arranged in a first private network, the information processing device comprising:
   a communication unit that receives, from a terminal device that communicates with a base station arranged in the first private network, the terminal device that acquires connection request information to another terminal device connected to a second private network different from the first private network, an execution request of connection processing for connecting to the another terminal device; and
   a control unit that performs the connection processing for connecting to the second private network on the basis of the execution request.
(20) A communication method by an information processing device arranged in a first private network, the communication method comprising:
   receiving, from a terminal device that communicates with a base station arranged in the first private network, the terminal device that acquires connection request information to another terminal device connected to a second private network different from the first private network, an execution request of connection processing for connecting to the another terminal device; and
   performing the connection processing for connecting to the second private network on the basis of the execution request.

### Reference Signs List

10 APPLICATION SERVER
11, 21 COMMUNICATION UNIT
12, 22, 32, 42 STORAGE UNIT
13, 23, 33, 43 CONTROL UNIT
20 MANAGEMENT DEVICE
30 BASE STATION
31, 41 RADIO COMMUNICATION UNIT
40
130 GATEWAY DEVICE
S COMMUNICATION SYSTEM

## Claims

1. A terminal device comprising:
a communication unit that communicates with a base station arranged in a first private network; and
a control unit that acquires connection request information with another terminal device connected to a second private network different from the first private network, and
requires that an information processing device arranged in the first private network perform connection processing for connecting to the another terminal device on the basis of the connection request information, wherein
the information processing device performs the connection processing for connecting to the second private network on the basis of the request.

2. The terminal device according to claim 1, wherein a first operator that manages the first private network is different from a second operator that manages the second private network.

3. The terminal device according to claim 1, wherein the connection request information includes network information indicating the second private network and terminal information indicating the another terminal device.

4. The terminal device according to claim 1, wherein the connection request information includes confirmation information for confirming validity of the request for the connection processing.

5. The terminal device according to claim 4, wherein the confirmation information includes a value calculated on the basis of a hash function.

6. The terminal device according to claim 1, wherein the control unit determines whether or not to connect to the another terminal device on the basis of connected terminal information regarding a connection destination.

7. The terminal device according to claim 6, wherein the connected terminal information includes at least one of connection acceptance information regarding the another terminal device the connection of which is accepted, connection form information regarding connection, and non-connectable information regarding the another terminal device the connection of which is rejected.

8. The terminal device according to claim 7, wherein the connection form information includes at least one of translation information indicating whether or not network address translation is performed and layer information regarding a layer to be connected.

9. The terminal device according to claim 6, wherein the connected terminal information is set for each terminal device or for each application executed by the terminal device.

10. The terminal device according to claim 1, wherein the connection processing includes an instruction to add routing information to the second private network to a gateway device of the first private network.

11. The terminal device according to claim 10, wherein the information processing device requires that the first private network install the gateway device in a case where the gateway device is not installed in the first private network.

12. The terminal device according to claim 10, wherein the gateway device omits adding processing of the routing information in a case of already holding the routing information to the second private network, and performs adding processing of the routing information according to the instruction in a case of not holding the routing information.

13. The terminal device according to claim 10, wherein the control unit connects to the another terminal device by using a filtering function of a port of the gateway device.

14. The terminal device according to claim 13, wherein the gateway device performs, by using at least one of an IP address of a packet transmitted by the another terminal device and an IP address of a packet transmitted by the terminal device, filtering of the packet.

15. The terminal device according to claim 1, wherein the control unit acquires the connection request information from an application server.

16. The terminal device according to claim 15, wherein the control unit notifies the application server that preparation for connection with the another terminal device is completed.

17. The terminal device according to claim 15, wherein the control unit
acquires notification indicating that the another terminal device completes preparation of connection to the terminal device itself from the application server, and starts communication with the another terminal device after notifying the application server that preparation of connection to the another terminal device is completed.

18. A communication method comprising:
communicating with a base station arranged in a first private network;
acquiring connection request information with another terminal device connected to a second private network different from the first private network; and
requiring that an information processing device arranged in the first private network perform connection processing for connecting to the another terminal device on the basis of the connection request information, wherein
the information processing device performs the connection processing for connecting to the second private network on the basis of the request.

19. An information processing device arranged in a first private network, the information processing device comprising:
a communication unit that receives, from a terminal device that communicates with a base station arranged in the first private network, the terminal device that acquires connection request information to another terminal device connected to a second private network different from the first private network, an execution request of connection processing for connecting to the another terminal device; and
a control unit that performs the connection processing for connecting to the second private network on the basis of the execution request.

20. A communication method by an information processing device arranged in a first private network, the communication method comprising:
receiving, from a terminal device that communicates with a base station arranged in the first private network, the terminal device that acquires connection request information to another terminal device connected to a second private network different from the first private network, an execution request of connection processing for connecting to the another terminal device; and
performing the connection processing for connecting to the second private network on the basis of the execution request.
